(19) Europäisches Patentamt
European Patent Office
Office européen des brevets

(11) EP 1 595 022 B1

(12) # FASCICULE DE BREVET EUROPEEN

(45) Date de publication et mention de la délivrance du brevet:
**14.09.2011 Bulletin 2011/37**

(21) Numéro de dépôt: **04710899.8**

(22) Date de dépôt: **13.02.2004**

(51) Int Cl.:
***D06M 15/643*** (2006.01) ***D06N 3/12*** (2006.01)
***C08K 5/57*** (2006.01) ***C09D 183/04*** (2006.01)

(86) Numéro de dépôt international:
**PCT/FR2004/000327**

(87) Numéro de publication internationale:
**WO 2004/074569 (02.09.2004 Gazette 2004/36)**

(54) **UTILISATION D'UNE FORMULATION SILICONE LIQUIDE RETICULABLE COMME BASE D'ENDUCTION TEXTILE**

VERWENDUNG EINER FLÜSSIGEN, VERNETZBAREN SILIKONZUSAMMENSETZUNG ALS TEXTILES BESCHICHTUNGSMITTEL

USE OF A CROSS-LINKABLE LIQUID SILICON FORMULATION AS A TEXTILE COATING BASE

(84) Etats contractants désignés:
**AT BE BG CH CY CZ DE DK EE ES FI FR GB GR HU IE IT LI LU MC NL PT RO SE SI SK TR**

(30) Priorité: **19.02.2003 FR 0302024**
**30.06.2003 FR 0307865**
**18.11.2003 FR 0313456**

(43) Date de publication de la demande:
**16.11.2005 Bulletin 2005/46**

(73) Titulaire: **Bluestar Silicones France**
**69486 Lyon Cedex 03 (FR)**

(72) Inventeurs:
- **DERUELLE, Martial**
**F-69390 Millery (FR)**
- **GIRAUD, Yves**
**F-69110 Sainte Foy les Lyon (FR)**

(56) Documents cités:
**EP-A- 0 506 113** **EP-A- 0 651 089**
**EP-B- 0 312 949** **EP-B- 0 681 014**
**FR-A- 2 826 664** **US-B1- 6 387 451**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 595 022 B1

## Description

Le domaine de la présente invention est celui des formulations silicones liquides réticulables susceptibles d'être utilisées pour former un revêtement qui permette d'apporter des fonctionnalités durables à un grand nombre de matériaux textiles.

De nombreux traitements sont appliqués aux matériaux textiles, ils leur apportent des fonctionnalités supplémentaires telles que notamment : douceur, hydrophilie, hydrophobie, oléophobie. Ces traitements consistent souvent à déposer sur la surface textile des polymères principalement de type silicone. Pour la douceur, ce sont des huiles polydiméthylsiloxanes longues (voire des gommes polyorganosiloxanes). Pour l'hydrophilie, ce sont des huiles silicones aminées ou à groupes polyéthers. Des composés organosiliciques ou purement organiques fluorés sont incorporés lorsque l'on cherche à apporter de l'oléophobie.

Pour certaines applications, comme par exemple l'hydrofugation des vêtements, une des caractéristiques recherchées est la permanence du traitement. On observe dans la pratique que les nombreuses formulations actuelles ne permettent pas d'atteindre des durabilités satisfaisantes.

Apporter une fonction durable à un matériau textile est une difficulté technique. Il est connu (cf. brevet DE-A-2 822 393) que, pour améliorer l'ancrage, il est souhaitable de réaliser des liaisons chimiques covalentes entre le support et le composé que l'on cherche à déposer sur la surface textile. Néanmoins, étant donné la nature et la diversité des polymères utilisés pour fabriquer les matériaux textiles, cette option n'est pas toujours possible et, lorsqu'elle l'est, elle reste spécifique à un certain type de matériau textile support.

Un des objectifs essentiel de la présente invention est de fournir un traitement qui permette d'apporter des fonctionnalités durables à un grand nombre de matériaux textiles.

Un autre objectif essentiel de la présente invention est de fournir un traitement visant à fixer un réseau siloxanique fonctionnel sur la surface du matériau textile.

Ces objectifs, parmi d'autres, sont atteints par la présente invention qui concerne l'utilisation d'au moins une formulation silicone liquide réticulable comme base d'enduction de matériau textile :

- pour permettre, en réticulant autour des fils, fibres et/ou filaments constitutifs du matériau textile, d'assurer une large couverture de protection du matériau textile, protection peu dépendante de la nature dudit matériau du fait qu'elle ne nécessite peu ou pas de points d'ancrage ;
- pour permettre, en faisant une gaine silicone réticulant chimiquement, d'assurer une protection durable du matériau textile en lui conférant une excellente résistance vis à vis des agressions rencontrées lors de l'usage ; par l'expression "protection durable", on entend définir une protection d'une part vis à vis des contraintes imposées par les procédés textiles tels que notamment les traitements thermiques de thermofixation, les traitements de teinture, et d'autre part vis à vis des agressions subies au cours de la vie du matériau textile (par exemple un vêtement) telles que notamment l'abrasion au porter, les lavages en milieu aqueux détergent, le nettoyage à sec en milieu solvant ;
- pour permettre, en apportant des fonctionnalités spécifiques supplémentaires d'usage, de former des revêtements possédant des propriétés d'usage telles que notamment la douceur, l'hydrophobie, l'oléophobie, l'hydrophilie, un effet antistatique ; et
- pour permettre, en raison de la nature spéciale des constituants de la formulation, de réaliser les opérations de dépôt de la formulation liquide et de sa réticulation à n'importe quel endroit des processus d'élaboration et/ou de rénovation et/ou d'entretien du matériau textile.

Dans le présent mémoire, l'expression « matériau textile » désigne : d'une part les fils, fibres et/ou filaments en matières synthétiques et/ou naturelles qui sont mis en oeuvre pour la fabrication d'articles textiles ; et d'autre part les articles textiles confectionnés à partir desdits fils, fibres et/ou filaments, comprenant au moins une surface textile et consistant par exemple dans des articles tissés, non tissés et/ou tricotés, lesdits "articles textiles confectionnés" englobant aussi bien des étoffes que des vêtements (comme par exemple des vestes et des pantalons). Par extension, l'expression « matériau textile » désigne encore les matériaux dont la texture de base se présente sous forme fibrilaire telles que notamment le papier et le cuir.

Ainsi, grâce à l'utilisation de cette formulation on procède à la fixation durable d'un réseau siloxanique fonctionnel sur la surface textile et le traitement ainsi réalisé permet d'obtenir avec succès les diverses propriétés avantageuses mentionnées ci-avant. Nous avons observé encore que dans certains cas le traitement ainsi réalisé non seulement n'empêche absolument pas la mise en teinture ultérieure du matériau textile, mais encore peut créer un effet d'amélioration de la tenue des couleurs aux lavages.

La formulation silicone liquide réticulable utilisée comme base d'enduction de matériau textile :

► est celle comprenant :

A - un système générateur de réseau silicone filmogène comprenant au moins une résine polyorganosiloxane (POS) présentant, par molécule, d'une part au moins deux motifs siloxyles différents choisis parmi ceux de types M, D, T, Q, l'un des motifs étant un motif T ou un motif Q et d'autre part au moins trois groupements hydrolysables/condensables de types OH et/ou $OR^1$ où $R^1$ est un radical alkyle linéaire ou ramifié en $C_1$ à $C_6$, de préférence en $C_1$ à $C_3$ ; B - un système promoteur d'accrochage dudit réseau sur la surface du matériau textile consistant dans :

- soit B-1 au moins un alkoxyde métallique de formule générale :

$$M[(OCH_2CH_2)_a\ OR^2]_n \qquad (I)$$

dans laquelle :

  - M est un métal choisi dans le groupe formé par : Ti, Zr, Ge, Si, Mn et Al :
  - n = valence de M ;
  - les substituants $R^2$, identiques ou différents, représentent chacun un radical alkyle, linéaire ou ramifié, en $C_1$ à $C_{12}$ ;
  - a représente zéro, 1 ou 2 ;
  - avec les conditions selon lesquelles, quand le symbole a représente zéro, le radical alkyle $R^2$ possède de 2 à 12 atomes de carbone, et quand le symbole a représente 1 ou 2, le radical alkyle $R^2$ possède de 1 à 4 atomes de carbone ;

- soit B-2 au moins un polyalkoxyde métallique découlant de l'hydrolyse partielle des alkoxydes monomères de formule (I) mentionnée supra dans laquelle le symbole $R^2$ a la signification précitée avec le symbole a représentant zéro ;
- soit une association de B-1 et B-2 ;
- soit B-3 une association de B-1 et/ou B-2 avec :

  - B-3/1 au moins un organosilane éventuellement alkoxylé contenant, par molécule, au moins un groupe alcényle en $C_2$-$C_6$,
  - et/ou B-3/2 au moins un composé organosilicié comprenant au moins un radical époxy, amino, uréido, isocyanato et/ou isocyanurate ;

C - un additif fonctionnel tel que défini dans la revendication 1.
D - éventuellement un système additif non réactif consistant dans : (i) au moins un solvant/diluant organique et/ou un composé organosilicié non réactif ; (2i) et/ou dans de l'eau dans le cas de la mise en oeuvre d'une formulation silicone liquide en émulsion ou en dispersion aqueuse ; et
E - éventuellement au moins un agent auxiliaire autre que D connu de l'homme de métier, qui est choisi, quand on en a besoin, en fonction notamment des applications dans lesquelles les matériaux textiles traités conformément à l'invention sont employés ;

► avec la condition selon laquelle on engage (les parties sont données en poids) :

- pour 100 parties de constituant A,
- de 0,5 à 200, de préférence de 0,5 à 100 et plus particulièrement de 1 à 70 parties de constituant B,
- 1 à 1 000, de préférence de 1 à 300 parties de constituant C selon la FU recherchée,
- de 0 à 10 000, de préférence de 0 à 5 000 parties de constituant D et
- de 0 à 100 parties de constituant E.

Les constituants A utilisables, séparément ou en mélange, sont des résines filmogènes classique parmi lesquelles on peut citer :

A-1: au moins une résine organosilicique préparée par cohydrolyse et cocondensation de chlorosilanes choisis dans le groupe constitué de ceux de formules $(R^3)_3SiCl$, $(R^3)_2Si(Cl)_2$, $R^3Si(Cl)_3$, $Si(Cl)_4$. Ces résines sont des oligomères ou polymères organopolysiloxanes ramifiés bien connus et disponibles dans le commerce. Elles présentent, dans leur structure, au moins deux motifs siloxyles différents choisis parmi ceux de formule $(R^3)_3SiO_{0,5}$ (motif M), $(R^3)_2SiO$ (motif D), $R^3SiO_{1,5}$ (motif T) et $SiO_2$ (motif Q), l'un au moins de ces motifs étant un motif T ou Q. Les radicaux $R^3$ sont répartis de telle sorte que les résines comportent environ 0,8 à 1,8 radicaux $R^3$ par atome de silicium. De plus

ces résines ne sont pas complètement condensées et elles possèdent encore environ 0,001 à 1,5 groupes OH et/ou alkoxyle $OR^1$ par atome de silicium ;

Les radicaux $R^3$ sont identiques ou différents et sont choisis parmi les radicaux alkyles linéaires ou ramifiés en $C_1$ - $C_6$, les radicaux alcényles en $C_2$ - $C_4$, phényle, trifluoro-3,3,3 propyle. On peut citer par exemple comme radicaux $R^3$ alkyles, les radicaux méthyle, éthyle, isopropyle, tertiobutyle et n-hexyle ;

Comme exemples d'oligomères ou de polymères organopolysiloxanes ramifiés on peut citer les résines MQ, les résines MDQ, les résines TD et les résines MDT, les groupes OH et/ou $OR^1$ pouvant être portées par les motifs M, D et/ou T, la teneur pondérale en groupes OH et/ou $OR^1$ étant comprise entre 0,2 et 10 % en poids ;

A-2: au moins une résine mixte préparée par cocondensation des résines organosilicique A-1 mentionnées supra avec des polymères organiques usuels tels que : des résines polyesters et alkydes modifiées ou non par des acides gras comme l'acide oléique, linoléique, ricinoléique ou des esters d'acides gras et de polyols aliphatiques comme l'huile de ricin, le suif ; des résines époxydes modifiées ou non par des acides gras ; des résines phénoliques, acryliques, mélamine-formaldéhydes ; des polyamides ; des polyimides ; des polyamides-imides ; des polyurées ; des polyuréthannes ; des polyéthers ; des polycarbonates ; des polyphénols.

Comme exemples concrets de constituants A qui sont préférés, peuvent être cités les mélanges A-3 :

- d'au moins une résine de type A-1 (résine A-1/1) présentant, dans sa structure, au moins deux motifs siloxyles différents choisis parmi ceux de formule $(R^3)_aSiO_{0,5}$ (motif M), $(R^3)_2SiO$ (motif D) et $R^aSiO_{1,5}$ (motif T), l'un au moins de ces motifs étant un motif T, les groupes OH et/ou $OR^1$ pouvant être portées par les motifs M, D et/ou T et la teneur pondérale en groupes OH et/ou $OR^1$ étant comprise entre 0,2 et 10 % en poids, et
- d'au moins une autre résine de type A-1 (résine A-1/2) présentant, dans sa structure, au moins deux motifs siloxyles différents choisis parmi ceux de formule $(R^3)_3SiO_{0,5}$ (motif M), $(R^3)_2SiO$ (motif D) et $R^3SiO_{1,5}$ (motif T) et $SiO_2$ (motif Q), l'un au moins de ces motifs étant un motif Q, les groupes OH et/ou $OR^1$ pouvant être portées par les motifs M, D et/ou T et la teneur pondérale en groupes OH et/ou $OR^1$ étant comprise entre 0,2 et 10 % en poids.

Comme exemples concrets de constituants A qui conviennent bien, peuvent être cités les mélanges A-3 :

- d'au moins une résine MDT hydroxylée ayant une teneur pondérale en groupe OH comprise entre 0,2 et 10 % en poids, et
- au moins une résine MQ hydroxylées ayant une teneur pondérale en groupe OH comprise entre 0,2 et 10 % en poids.

Dans les mélanges A-3, les proportions respectives des constituants ne sont pas critiques et peuvent varier dans de larges zones. Ces mélanges contiennent par exemple 60 à 90 % en poids de résine(s) A-1/1 et 40 à 10 % en poids de résine(s) A-1/2.

En ce qui concerne les constituants B-1, on peut mentionner, à titre d'exemples de symboles $R^2$ dans les dérivés organiques du métal M de formule (I), les radicaux : méthyle, éthyle, propyle, isopropyle, butyle, isobutyle, hexyle, éthyl-2 hexyle, octyle, décyle et dodécyle.

Comme exemples concrets de constituants B-1 qui sont préférés, peuvent être cités : les titanates d'alkyles comme le titanate d'éthyle, le titanate de propyle, le titanate d'isopropyle, le titanate de butyle, le titanate d'éthyl-2 hexyle, le titanate d'octyle, le titanate de décyle, le titanate de dodécyle, le titanate de β-méthoxyéthyle, le titanate de β -éthoxyéthyle, le titanate de β-propoxyéthyle, le titanate de formule $Ti[(OCH_2CH_2)_2\ OCH_3]_4$ ; les zirconates d'alkyles comme le zirconate de propyle, le zirconate de butyle ; les silicates d'alkyles comme le silicate de méthyle, le silicate d'éthyle, le silicate d'isopropyle, le silicate de n-propyle ; et des mélanges de ces produits.

Comme exemples concrets de polyalkoxydes B-2 qui sont préférés, provenant de l'hydrolyse partielle des titanates, des zirconates et silicates monomères, peuvent être cités : les polytitanates B-2 provenant de l'hydrolyse partielle des titanates d'isopropyle, de butyle ou d'éthyl-2 hexyle ; les polyzirconates B-2 provenant de l'hydrolyse partielle des zirconates de propyle et de butyle ; les polysilicates B-2 provenant de l'hydrolyse partielle des silicates d'éthyle et d'isopropyle ; et des mélanges de ces produits.

Comme exemples concrets de constituants B-3/1 qui sont préférés, peuvent être cités les organosilanes éventuellement alcoxylés choisis parmi les produits de formule générale suivante :

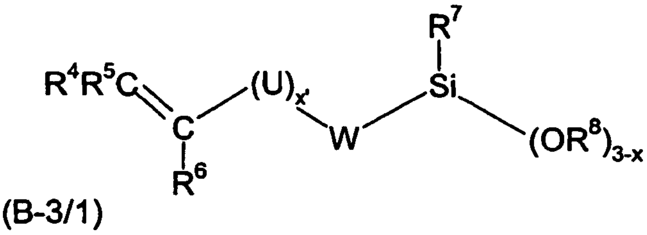

(B-3/1)

dans laquelle :

- R4, $R^5$, $R^6$ sont des radicaux hydrogénés ou hydrocarbonés identiques ou différents entre eux et représentent, de préférence, l'hydrogène, un alkyle linéaire ou ramifié en $C_1$-$C_4$ ou un phényle éventuellement substitué par au moins un alkyle en $C_1$-$C_3$,
- U est un alkylène linéaire ou ramifié en $C_1$ - $C_4$, ou un groupement divalent de formule -CO-O-alkylène- où le reste alkylène a la définition donnée supra et la valence libre de droite (en gras) est reliée au Si via W,
- W est un lien valenciel ,
- $R^7$ et $R^8$ sont des radicaux identiques ou différents et représentent un alkyle en $C_1$ - $C_4$ linéaire ou ramifié,
- x' = 0 ou 1,
- x = 0 à 2, de préférence 0 ou 1 et plus préférentiellement encore 0.

Sans que cela soit limitatif, il peut être considéré que le vinyltriméthoxysilane ou le γ-(meth)acryloxypropyltriméthoxysilane est un composé B-3/1 particulièrement approprié.

Comme exemples concrets de constituants B-3/2 qui sont préférés, peuvent être cités les tris[(trialkoxysilyl) alkyl] isocyanurates où les groupes alkyle comportent de 1 à 4 atomes de carbone et les composés organosiliciés choisis :

- soit parmi les produits B-3/2-a répondant à la formule générale suivante :

(B-3/2-a)

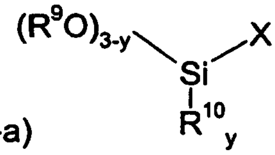

dans laquelle :

+ $R^9$ est un radical alkyle linéaire ou ramifié en $C_1$ - $C_4$,
+ $R^{10}$ est un radical alkyle linéaire ou ramifié,
+ y est égal à 0, 1, 2 ou 3, de préférence à 0 ou 1 et, plus préférentiellement encore à 0,
+ où X a la signification :

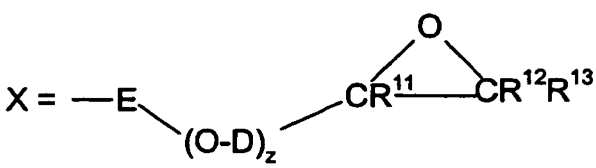

avec :

+ E et D qui sont des radicaux identiques ou différents choisis parmi les alkyles en $C_1$-$C_4$ linéaires ou ramifiés,
+ z qui est égal à 0 ou 1,
+ $R^{11}$, $R^{12}$, $R^{13}$ qui sont des radicaux identiques ou différents représentant l'hydrogène ou un alkyle linéaire ou ramifié en $C_2$-$C_4$, l'hydrogène étant plus particulièrement préféré,
+ $R^{11}$ et $R^{12}$ ou $R^{13}$ pouvant alternativement constituer ensemble et avec les deux carbones porteurs de l'époxy,

un cycle alkyle ayant de 5 à 7 chaînons,

- soit parmi les produits B-3/2-b constitués par des polydiorganosiloxanes époxyfonctionnels comportant :

(i) au moins un motif siloxyle de formule :

$$XpGqSiO_{\frac{4-(p+q)}{2}} \qquad (B\text{-}3/2\text{-}b)$$

dans laquelle :

+ X est le radical tel que défini ci-dessus pour la formule (B-3/2-a),
+ G est un groupe hydrocarboné monovalent, exempt d'action défavorable sur l'activité du catalyseur et choisi, de préférence, parmi les groupes alkyles ayant de 1 à 8 atomes de carbone inclus, éventuellement substitués par au moins un atome d'halogène, avantageusement, parmi les groupes méthyle, éthyle, propyle et 3,3,3-trifluoropropyle et ainsi que parmi les groupes aryles et, avantageusement, parmi les radicaux xylyle et tolyle et phényle,
+ p = 1 ou 2,
+ q = 0,1 ou 2,
+ p + q = 1,2 ou 3,

et (2i) éventuellement au moins un motif siloxyle de formule :

$$GrSiO_{\frac{4-r}{2}} \qquad (B\text{-}3/2\text{-}b2)$$

dans laquelle G a la même signification que ci-dessus et r a une valeur comprise entre 0 et 3, par exemple entre 1 et 3.

Les composés B-3/2 sont préférentiellement des tris[3-(trimethoxysilyl)propyl] isocyanurates et des époxyalcoxymonosilanes B-3/2-a.

A titre d'exemple de tels composés B-3/2-a, on peut citer :

+ le 3-glycidoxypropyltriméthoxysilane (GLYMO)
+ le 3,4-époxycyclohexyléthyltriméthoxysilane.

Pour la réalisation de l'invention, comme constituant B, on utilise de manière plus préférée les titanates, les zirconates et les silicates B-1 suivants, pris seuls ou en mélange entre eux : le titanate d'éthyle, le titanate de propyle, le titanate d'isopropyle, le titanate de butyle (n-butyle), le zirconate de propyle, le zirconate de butyle, le silicate d'éthyle, le silicate de propyle et le silicate d'isopropyle.

Lorsqu'on utilise B-1 + B-3/1 ou B-1 + B-3/2, les proportions pondérales de B-1 par rapport au total B-1 + B3/1 ou B-3/2 sont notamment de 5 à 100 %, de préférence de 8 à 80%.

Sur le plan quantitatif lorsqu'on utilise B-1 + B-3/1 + B-3/2, il peut être précisé que les proportions pondérales entre B-1, B-3/1 et B-3/2, exprimées en pourcentages en poids par rapport au total des trois, sont les suivantes :

| | |
|---|---|
| B-1 | $\geq$ 1, de préférence compris entre 5 et 25, |
| B-3/1 | $\geq$ 10, de préférence compris entre 15 et 70, |
| B-3/2 | $\leq$ 90, de préférence compris entre 70 et 15 , |

étant entendu que la somme de ces proportions en B-1, B-3/1, B-3/2 est égale à 100 %.

En ce qui concerne les constituants B-1, ils peuvent consister en un alkoxyde métallique où le métal M peut être partiellement relié à un ou plusieurs ligands tels que par exemple ceux dérivés notamment de β-dicétones, β-cétoesters et esters maloniques (comme par exemple l'acétylacétone) ou de la triéthanolamine.

Les constituants C-1 utilisables, séparément ou en mélange, sont des silanes , des POS essentiellement linéaires et des résines POS portant dans leurs molécules, rattachées à des atomes de silicium, les deux fonctionnalités FA et FU.

Les fonctions FA sont plus précisément des fonctions condensables/hydrolysables correspondants à OH et/ou $OR^1$ ou des fonctions capables de générer in situ des fonctions OH et/ou $OR^1$. S'agissant des fonctions FU, celles qui sont plus précisément visées dans la présente invention, dans le cas des constituants C-1, sont les suivantes :

► pour apporter les propriétés de douceur et/ou d'hydrophobie,on peut citer :

- les enchaînements siloxanes comprenant des motifs M, D et/ou T tels que définis supra à propos des constituants A-1,
- le groupe aminoalkyle, non salifié, par exemple de formule générale :

$$-R^{14}-NR^{15}R^{16} \text{ ou } -R^{14}-NH-R^{17}-NR^{15}R^{16}$$

dans laquelle:

+ $R^{14}$ et $R^{17}$ = reste hydrocarboné divalent comme par exemple $-(CH_2)_e$-avec e = 1 à 10,
+ $R^{15}$ = H ou $-C_iH_{2i+1}$
+ $R^{16}$ a la même définition que $R^{15}$ et peut être identique ou différent de $R^{15}$,

le groupe amino pouvant ainsi être primaire, secondaire ou tertiaire ; selon des variantes, le groupe amino peut être inclus dans un cycle ou être inclus dans des groupements isocyanurates ou HALS (Hindered Amine Light Stabiliser, comme par exemple un groupement du type pipéridine ou autre) ;

- en pratique le groupe aminoalkyle peut consister dans les espèces suivantes :

+ aminopropyle$(H_2N)(CH_2)_3$-
+ N-méthyl-3-aminopropyle $(H_3CNH)(CH_2)_3$-
+ N-aminoéthyl-3-aminopropyle $(H_2N)(CH_2)_2NH(CH_2)_3$-
+ $C_6H_5CH_2NH(CH_2)_2$ $(NH)(CH_2)_3$-
+ 3-uréidopropyle : $(H_2N\ CO\ NH)(CH_2)_3^-$
+3,4,5-dihydroimidazole-1-yl-propyle ;

► pour apporter les propriétés d'oléophobie,on peut citer :

- les groupes fluorés par exemple de formule générale :

$$-Z-(-R^F)_k$$

dans laquelle :

+ Z représente une rotule divalente ou trivalente de nature hydrocarbonnée qui peut être un reste cyclique ou non, aliphatique saturé ou insaturé, aromatique, mixte aliphatique/aromatique, pouvant renfermer un ou plusieurs hétérotomes oxygénés contenant de 1 à 30 atomes de carbone,
+ k est 1 ou 2,
+ $R^F$ représente le groupe $-C_sF_{2s}-CF_3$ avec s égal à ou différent de zéro ou le groupe $C_sF_{2s}H$ avec s égal à ou supérieur à 1 ;

► pour apporter les propriétés d'hydrophilie et/ou d'effet antistatique,on peut citer :

- les groupes polyéthers par exemple de formules générales :

$$-[OCH_2CH_2]_v-[OCH_2CH(CH_3)]_w-OH$$

$$-[OCH_2CH_2]_v-[OCH_2CH(CH_3)]_w-OR^1$$

+ avec v et w différents de 0 et notamment compris entre 5 et 30.
Comme constituant C-1 sont utilisés les composés organosiliciés ci-après listés :

- les polyalkoxysilanes de formule :

$$(R^1)_bSi[(OCH_2CH_2)_a\ OR^1{}_{4-b} \qquad (II)$$

dans laquelle :

+ les substituant $R^1$ et $R^2$ et le symbole a sont tels que définis supra à propos de la description des constituants A et B ;
+ b est 1,2 ou 3;

- les diorganopolysiloxane essentiellement linéaire comprenant un groupement hydroxyle à chaque extrémité de chaîne, de formule :

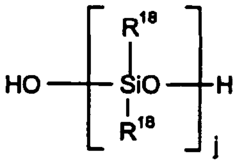

(III)

dans laquelle :

+ les substituants $R^{18}$, identiques ou différents, représentent chacun un radical monovalent hydrocarboné saturé ou non en $C_1$ à $C_{13}$, substitué ou non substitué, aliphatique, cyclanique ou aromatique ;
+ j a une valeur suffisante pour conférer aux diorganopolysiloxanes de formule (III) une viscosité dynamique à 25°C allant de 1.000 à 10.000.000 mPa.s ;
+ il doit être compris que, dans le cadre de la présente invention, on peut utiliser comme POS hydroxylés de formule (III) un mélange constitué de plusieurs polymères hydroxylés qui diffèrent entre eux par la valeur de la viscosité et/ou la nature des substituants liés aux atomes de silicium ; il doit être compris encore que les POS de formule (III) peuvent éventuellement comprendre des motifs T de formule $R^{18}SiO_{3/2}$ et/ou des motifs $SiO_2$ dans la proportion d'au plus 1 % (ces % exprimant le nombre de motifs T et/ou Q pour 100 atomes de silicium) ;

- les copolymères POS-polyéther issus notamment de la réaction :

d'un polyéther de formule :

$$CH_2=CH-CH_2-[OCH_2CH_2]_v-[OCH_2CH(CH_3)]_w-OH$$

sur une huile POS de formule :

$$Me_3SiO(Me_2SiO)_{x},(MeHSiO)_{y},SiMe_3,$$

+ avec Me = méthyle ;
+ avec v et w différents de 0 et notamment compris entre 5 et 30 ;
+ avec x' allant de 20 à 150 ;
avec y' allant de 2 à 10 ;
+ le copolymère pouvant être additionné d'un additif tel qu'un polyéther libre, par exemple en proportion allant de 40/60 à 60/40 ;

- les résines POS hydroxylées comprenant dans leur structure des motifs siloxyles T et éventuellement M et/ou éventuellement D tels que définis supra à propos des résines A-1 ;
- les résines POS hydroxylées obtenues notamment :

→ par hydrolyse d'un alkoxysilane S substitué par des FU ; il peut s'agir, par exemple, d'un trialkoxysilane FU-substitué permettant d'obtenir une résine hydroxylée à motifs T, dénommée également résine T(OH) ;

→ par homocondensation des silanes S hydrolysés ;
→ et par « stripping » entraînement à la vapeur des hydrolysats dérivant des FU ;

- des mélanges des composés organosiliciques précités.

Les fonctions FU substituant S répondent aux mêmes définitions que celles données ci-dessus. Comme illustration avantageuse de ce mode de mise en oeuvre d'un constituant C-1 de type résine POS, on peut citer celui obtenu à partir de γ-aminopropyltriéthoxysilane hydrolysé et soumis à un « stripping » de l'éthanol formé par l'hydrolyse. La résine polyhomocondensée obtenue, est un mélange d'oligomères contenant de 4 à 10 silicium et comprenant des motifs :

$T(OH) = RSi(OH)O_{2/2}$
$T = R\ SiO_{3/2}$
$T(OH)_2 = RSi(OH)_2O_{1/2}$
$T\ (OH)_3 = RSi(OH)_3$,

ces motifs étant respectivement présents en quantité décroissante et $R = NH_2\text{-}(CH_2)_3\text{-}$. Il s'agit alors d'une résine T(OH) aminée.

Comme exemples concrets de constituants C-1 qui conviennent bien, peuvent être citées les résines MDT hydroxylées ayant une teneur pondérale en groupe OH comprise entre 0,2 et 10 % en poids, prises seules ou en mélange avec des huiles silicones hydroxylées de formule (III).

A propos des proportions d'emploi des constituants C-1, elles se situent, comme expliqué ci-avant, dans l'intervalle allant de 1 à 1 000 parties en poids de constituant C-1 selon la FU recherchée, pour 100 parties en poids de constituant A. Par exemple, dans le cas où la FU apporte l'hydrophobie, on utilise alors généralement de 2 à 30 parties en poids de constituant C-1.

Comme cela ressort des définitions données ci-avant, dans le cas où le constituant A est une résine POS équipée de motif(s) T et éventuellement M et/ou éventuellement D, il convient de comprendre que cette résine peut alors jouer aussi le rôle d'additif fonctionnel C-1 d'hydrofugation, à condition d'être engagé dans des proportions suffisantes égales à la somme des proportions correspondant à l'ensemble A + C-1.

Les constituants C-2 utilisables, séparément ou en mélange, sont des composés hydrocarbonés portant dans leur molécule, rattachées à des atomes de carbone, les deux fonctionnalités FA et FU.

Les fonctions FA sont plus précisément des fonctions condensables/hydrolysables correspondants à OH et/ou $OR^1$ ou des fonctions capables de générer in situ des fonctions OH et/ou $OR^1$ . S'agissant des fonctions FU, celles qui sont plus précisément visées dans la présente invention, dans le cas des constituants C-2, sont celles apportant des propriétés d'oléophobie, d'hydrophilie et/ou d'effet antistatique.

Comme constituant C-2 sont utilisés les composés hydrocarbonés ci-après listés :

- (pour les propriétés d'oléophobie) les alcools fluorés, de préférence perfluorés de formule :

$$R^{19} - OH \qquad (IV)$$

  où $R^{19}$ représente un radical aliphatique, linéaire ou ramifié, ayant de 2 à 20 atomes de carbone, lesdits atomes de carbone étant substitués par au moins un atome de fluor et éventuellement par au moins un ou atome d'hydrogène ;
- (pour les propriétés d'hydrophilie et/ou d'effet antistatique) les polyéthers non bloqués de formule :

$$R^{20}\text{-}[OCH_2CH_2]_v\text{-}[OCH_2CH(CH_3)]_w\text{-}OH \qquad (V)$$

où $R^{20}$ représente un radical alkyle, linéaire ou ramifié, ayant de 1 à 4 atomes de carbone et les symboles v et w sont tels que définis supra.

Comme exemples concrets de constituants C-2 qui conviennent bien, peuvent être cités les alcools perfluorés de formule $R^F\text{-}(CH_2)_m\text{-}OH$ où $R^F$ est tel que défini supra et m est un nombre allant de 0 à 10.

A propos des proportions d'emploi des constituants C-2, elles se situent, comme expliqué ci-avant, dans l'intervalle allant de 1 à 1 000 parties en poids de constituant C-2 selon la FU recherchée, pour 100 parties en poids de constituant A.

Comme exemples concrets de constituants D optionnels qui sont préférés, peuvent être cités, outre l'eau, les composés ci-après listés :

- les solvants organiques classiques, pouvant jouer le rôle pour certains de diluants, choisis dans le groupe constitué

par :

+ des solvants aliphatiques ayant de 5 à 20 atomes de carbone tels que l'hexane, l'heptane, le « White Spirit », l'octane, le dodécane, et cycloaliphatique tels que le cyclohexane, le méthylcyclohexane, la décaline ;
+ des solvants chlorés tels que le trichloroéthylène, le trichloroéthane, le perchloroétylène, le perchloroéthane, le dichlorométhane ;
+ des solvants aromatiques tels que le toluène, le xylène ;
+ des alcanols tels que méthanol, l'isopropanol, le butanol, l'octanol ;
+ des cétones aliphatiques telles que l'acétone, la méthyléthylcétone, la méthylbutylcétone et cycloaliphatiques telles que la cyclopentanone, la cyclohexanone ;
+ les esters d'acides carboxyliques non gras et d'alcanols tels que l'acétate d'éthyle, de butyle, de pentyle ;
+ les esters dérivés d'acides gras saturés en C10 à C16, de préférence en C12 à C14 et d'alcanols tels que des myristates (C14), des laurates (C12) et des mélanges ;
+ les éthers-oxydes tels que l'éther dibutylique, l'éther diisopropylique, le monoéther méthylique ou éthylique de l'éthylèneglycol, le monoéther éthylique ou butylique du diéthylèneglycol.

- les diorganopolysiloxanes linéaires non réactifs de formule :

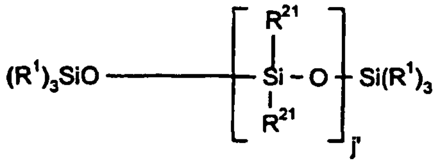

(VI)

dans laquelle :

+ les substituants $R^{21}$, identiques ou différents, ont les mêmes significations que celles données ci-avant pour le diorganopolysiloxane réactif de formule (III) ;
+ j' a une valeur suffisante pour conférer aux polymères de formule (VI) une viscosité dynamique à 25°C allant de 10 à 200.000 mPa.s ;

- les résines POS ayant les mêmes significations que celles données ci-avant pour le constituant A, mais qui sont exemptes cette fois de tout groupement fonctionnel de types OH et/ou $OR^1$. Comme exemples concrets de résines utilisables, on peut citer les résines MQ, MDQ, TD et MDT.

Comme exemples concrets de constituants auxiliaires E optionnels qui sont préférés, peuvent être cités les composés ci-après listés :

- des charges appropriées parmi lesquelles on mentionnera notamment :

+ les poudres métalliques telles que la poudre de zinc, d'aluminium, de magnésium ;
+ des oxydes tels que la silice, le quartz broyé, l'alumine, l'oxyde de zirconium, de titane, de zinc, de magnésium, les oxydes de fer, de cérium, de lanthane, de praséodyme, de néodyme ;
+les silicates tels que le mica, le talc, la vermiculite, le kaolin, le feldspath, les zéolithes ;
+ le carbonate de calcium, le métaborate de baryum, les pyrophosphates de fer, de zinc, de calcium, le phosphate de zinc, le noir de carbone ;
+ des pigments tels que les phtalocyanines, les oxydes de chrome, le sulfure et les sulfoséléniures de cadmium.

- des antifongiques, des bactéricides connus de l'homme de métier ;
- des agents thixotropants connus de l'homme de métier ;
- et, dans le cas de la mise en oeuvre d'une formulation silicone liquide réticulable en émulsion ou dispersion aqueuse, des agents tensioactifs non ioniques, ioniques ou amphotères.

Les formulations silicones liquides utilisées, dans le cadre de la présente invention, comme bases d'enduction textile sont préparées par simple mélange à la température ambiante, et dans un ordre quelconque d'introduction, des constituants A, B, C, D (optionnel) et E (optionnel). Les quantités engagées sont nettement définies comme indiqué

précédemment.

L'ordre d'incorporation des constituants peut être quelconque, mais il est toutefois préférable, pour éviter tout risque de précipitation de produits solides ou de formation de gel, d'ajouter le constituant A sous forme d'une solution dans le constituant D solvant/diluant ou sous forme d'une émulsion/dispersion aqueuse quand le constituant D comprend de l'eau.

L'introduction et le mélange intime des charges optionnelles E, quand on en utilise, avec les constituants A, B, C et éventuellement D sont effectués à l'aide des procédés classiques en usage chez les fabricants de formulations textiles. On peut utiliser pour le mélange, par exemple, des broyeurs à galets ou des broyeurs à turbines.

Les formulations bases d'enduction textile ainsi préparées présentent l'avantage de durcir par simple séchage à l'air pendant un intervalle de temps pouvant aller de quelques dizaines de minutes à plusieurs heures ou au besoin plusieurs dizaines d'heures. Ce laps de temps. peut être accéléré par chauffage à une température se situant dans l'intervalle allant de 50 °C à 180 °C.

Les bases d'enduction textile ainsi préparées ont une stabilité au stockage excellente et peuvent être employées dans toutes les applications textiles nécessitant la présence, après durcissement, de revêtements durables à caractéristiques physiques très élevées.

Suivant une caractéristique avantageuse, les formulations silicones liquides réticulables utilisées comme base d'enduction textile peuvent être préparées sous forme concentrée (on engage par exemple, pour 100 parties en poids de constituant A, de 0 à 100 parties de constituant D), puis être ensuite diluées au moment de leur emploi avec un diluant organique, un solvant organique ou de l'eau à raison de 1 à 30 parties en poids de formulation pour 100 parties en poids de solvant, diluant ou eau.

Selon une première modalité générale de traitement, l'utilisation conforme à la présente invention peut être mise en oeuvre directement sur les articles textiles confectionnés à partir des fils, fibres et/ou filaments, comprenant au moins une surface textile et consistant par exemple dans des articles tissés, non tissés et/ou tricotés, en opérant à n'importe quel moment des processus d'élaboration (pour les étoffes) et/ou de rénovation et/ou d'entretien (pour les vêtements) du matériau textile.

Par surface textile, on entend une surface obtenue par assemblage de fils, fibres et/ou filaments par un procédé quelconque tel que par exemple, le collage, le feutrage, le tissage, le tressage, le flocage, ou le tricotage.

Les fils, fibres et/ou filaments servant à la fabrication de ces articles textiles peuvent être issus de la transformation d'une matrice thermoplastique synthétique constituée d'au moins un polymère thermoplastique choisi dans le groupe constitué par : les polyamides, les polyoléfines, les chlorures de polyvinylidène, les polyesters, les polyuréthanes, les acrylonitriles, les copolymères (méth)acrylate-butadiène-styrène, leurs copolymères et mélanges. La matrice thermoplastique peut comprendre des additifs, tels que des pigments, délustrants, matifiants, catalyseurs, stabilisants chaleur et/ou lumière, agents anti-bactériens, anti-fongiques, et/ou anti-acariens. Il peut par exemple s'agir d'un agent matifiant, par exemple choisi parmi les particules de dioxyde de titane et/ou de sulfure de zinc.

Les fils, fibres et/ou filaments peuvent encore être issus de matières naturelles tels que notamment le coton, le lin, la laine, suivant les procédés de transformation connus de l'homme de métier. Bien entendu, on peut utiliser des mélanges de matières synthétiques et naturelles.

Dans l'utilisation selon la présente invention, pour appliquer la base d'enduction textile sur l'article à traiter, on utilise des techniques classiques de l'industrie textile, notamment en faisant appel à la technique d'imprégnation dite de "foulardage" (padding en anglais).

Lorsque l'article textile est traité par une formulation comprenant un diluant ou solvant organique, il est souhaitable de faire subir ensuite à cette article un traitement thermique pour notamment chasser le diluant ou le solvant sous forme de vapeur.

Généralement la quantité de base d'enduction textile déposée sur l'article textile correspond à une quantité comprise entre 0,1 et 10 % en poids par rapport au poids de l'article textile sec traité.

Selon une seconde modalité générale de traitement , on peut mettre aussi en contact les fils, fibres et/ou filaments avec la base d'enduction textile à n'importe quel moment des processus d'élaboration du matériau textile.

Par fil, on entend par exemple un objet multifilamentaire continu, un fil continu obtenu par assemblage de plusieurs fils ou un filé de fibres continu, obtenu à partir d'un unique type de fibres, ou d'un mélange de fibres. Par fibre, on entend par exemple une fibre courte ou longue, une fibre destinée à être travaillée en filature ou pour la fabrication d'articles non tissés ou un câble destiné à être coupés pour former des fibres courtes.

Le procédé de fabrication de fils, fibres et/ou filaments débute généralement par le passage en filière de la matrice thermoplastique, et finit avant l'étape de fabrication de surface textile.

Le procédé de fabrication de fils, fibres et/ou filaments comprend notamment une étape de filage. Par étape de filage, on entend une opération déterminée consistant à l'obtention de fils, fibres et/ou filaments. L'étape de filage débute lors du passage de la matrice thermoplastique à travers une ou plusieurs filières et finit par le transfert des fils, fibres et/ou filaments obtenus sur une bobine (pour les fils ou filaments) ou dans un pot (pour les fibres), également appelé renvidement. L'étape de filage peut également comprendre des étapes qui sont effectuées entre le passage

dans la filière et le bobinage. Ces étapes peuvent être par exemple des étapes d'ensimage, de réunification des filaments (par un ou plusieurs points d'entraînement ou guide de convergence), d'étirage, de réchauffement des filaments, de relaxation et de thermofixation.

Ainsi, le dépôt sur les fils, fibres et/ou filaments de la base d'enduction textile conforme à la présente invention peut être effectué par exemple après la convergence des fils, fibres et/ou filaments et/ou pendant une étape d'étirage des fils, fibres et/ou filaments. Ledit dépôt peut également être effectué entre ces deux étapes. Préférentiellement, on dépose la base d'enduction textile conforme à la présente invention sur les fils, fibres et/ou filaments pendant l'étape d'ensimage.

Selon un autre objet préféré de l'invention, on dépose sur les fils, fibres et/ou filaments une composition d'ensimage comprenant au moins une base d'enduction textile conforme à la présente invention.

On peut également déposer sur les fils, fibres et/ou filaments, la base d'enduction textile conforme à la présente invention pendant une étape de traitement lors de la reprise des fils, fibres et/ou filaments. Par étape de traitement, on entend des étapes de traitement après reprise des fils, fibres et/ou filaments, telles que par exemple des étapes de texturation, d'étirage, d'étirage-texturation, d'ensimage, de relaxation, de thermofixation, de torsion, de fixation, de frisage, de lavage et/ou de teinture. On peut notamment déposer sur les fils, fibres et/ou filaments, une base d'enduction textile conforme à la présente invention pendant une opération choisie dans le groupe constituée par : la relaxation, la torsion, la fixation, le frisage, l'étirage et/ou la texturation des fils, fibres et/ou filaments.

On peut également procéder au dépôt sur les fils, fibres et/ou filaments d'une composition d'ensimage comprenant au moins une base d'enduction textile conforme à la présente invention, notamment pendant une étape de traitement lors de la reprise des fils, fibres et/ou filaments.

On peut aussi placer les fils, fibres et/ou filaments dans une composition de lavage et/ou de teinture comprenant au moins une base d'enduction textile conforme à la présente invention.

Selon une troisième modalité générale de traitement, l'utilisation conforme à la présente invention peut être mise en oeuvre en deux temps :

- dans un premier temps : en mettant en contact les fils, fibres et/ou filaments avec la base d'enduction textile à n'importe quel moment des processus d'élaboration du matériau textile; puis
- dans un deuxième temps : en mettant en contact les articles textiles confectionnés à partir des fils, fibres et/ou filaments traités en opérant à n'importe quel moment des processus d'élaboration (pour les étoffes) et/ou de rénovation et/ou d'entretien (pour les vêtements) du matériau textile.

Le traitement avec la base d'enduction textile peut être appliqué soit de manière partielle soit de manière complète d'une part sur les fils, fibres et/ou filaments puis d'autre part sur les articles textiles confectionnés à partir des fils, fibres et/ou filaments traités.

Par l'expression "de manière partielle", on entend définir notamment une application qui consiste à traiter les fils, fibres et/ou filaments avec une partie des ingrédients constitutifs de la base d'enduction textile et à apporter le complément lors du traitement des articles textiles confectionnés à partir des fils, fibres et/ou filaments traités. Par exemple, le système promoteur d'accrochage (constituant B) peut être apporté au moment du traitement des fils, fibres et/ou filaments, tandis que le système générateur de réseau (constituant A) et l'additif fonctionnel (constituant C) sont apportés au moment du traitement des articles.

Par l'expression "de manière complète", on entend définir une application où d'une part les fils, fibres et/ou filaments puis d'autre part les articles textiles confectionnés à partir de ces fils, fibres et/ou filaments sont traités, chaque fois, avec une base enduction textile comportant tous ses ingrédients constitutifs, avec la possibilité que ces derniers ne soient pas obligatoirement présents dans les mêmes proportions au moment du traitement des fils, fibres et/ou filaments puis au moment du traitement des articles.

On précisera encore qu'il est possible d'effectuer un ou plusieurs dépôts de la base enduction textile (prise en tout ou partie) sur les fils, fibres et/ou filaments et/ou sur les articles textiles.

Les exemples qui vont suivre illustrent l'utilisation, selon la présente invention, d'une formulation silicone liquide réticulable, comme base d'enduction textile.

<u>EXEMPLE 1</u>

Hydrophobie durable.

1) Formulation silicone liquide réticulable selon l'invention (composition C1) :

Elle présente la constitution suivante (les parties sont données en poids) :

- A : mélange de :
    - résine MDT hydroxylée ayant 0,5 % d'OH en poids et constituée de 62 % en poids de motifs $CH_3SiO_{3/2}$, 24 % en poids de motifs $(CH_3)_2\ SiO_{2/2}$ et 14 % en poids de motifs $(CH_3)_3\ SiO_{1/2}$ : 47 parties ; et de
    - résine MQ hydroxylée ayant 2 % d'OH en poids et constituée de 45 % en poids de motifs $SiO_{4/2}$ et 55.% en poids de motifs $(CH_3)_3\ SiO_{1/2}$: 7 parties ;
- B : mélange de :
    - titanate de n-butyle (Bu) de formule $Ti(OBu)_4$ : 2 parties ; et de
    - silicate d'éthyle (Et) de formule $Si(OEt)_4$ : 4 parties ;
- C : résine MDT hydroxylée ayant 0,5 % d'OH en poids et constituée de 62 % en poids de motifs $CH_3SiO_{3/2}$, 24 % en poids de motifs $(CH_3)_2\ SiO_{2/2}$ et 14 % en poids de motifs $(CH_3)_3\ SiO_{1/2\ :\ 10}$ parties ;
- D : White Spirit : 30 parties.

Le composé est re-dilué dans du solvant avant application.
2) Formulation de comparaison (composition C2) :

Les performances de la composition C1 sont comparées à celles d'une composition C2 conventionnelle ("Scotch Guard") qui est un produit commercial connu pour ses excellentes propriétés hydrofuges. Il est appliqué par spray selon le protocole recommandé par le fournisseur.

3) Tests d'hydrofugation permanente :

L'article textile traité utilisé est un tricot en Polyamide 6.6 du type tricotage interlock réalisé sur machine de tricotage circulaire double fonture avec des fils PA6.6 texture 78 dtex 68 brins et 78 dtex 23 brins.

L'article textile est traité par foulardage par des solutions à 5% et 10% (en poids) de la composition C1 dans de l'heptane. Il subit un séchage à température ambiante (23 °C) pendant 12 heures, puis il est éventuellement traité thermiquement pendant 3 minutes à 150 °C.

- La mesure de l'effet perlant est effectuée par le test de déperlance normalisé connu sous le nom de « Spray-Test » (AATC Test Method 22-1996) ) :
    - Le test consiste a asperger l'échantillon de l'article textile avec un volume d'eau donné. L'aspect de l'échantillon est ensuite évalué visuellement et comparé aux standards. Une note de 0 à 100% est attribuée en fonction de la quantité d'eau retenue. Pour 0, l'échantillon est totalement mouillé, pour 100% , l'échantillon est complètement sec.
    - Afin d'obtenir une mesure plus quantitative de la performance de durabilité de l'effet déperlant, les échantillons sont pesés avant et après aspersion et la quantité d'eau retenue par l'échantillon textile est déterminée par différence. Cette quantité est ensuite rapportée à la quantité d'eau retenue initialement par l'échantillon textile non lavé.
- Pour tester la durabilité du traitement, une machine d'essai GIROWASH (usuellement employée dans le cadre d'étude de stabilité des couleurs au lavage - décrite dans la norme ISO 105 C06) a été utilisée. Ce système comprend un dispositif mécanique permettant : la rotation à 40 tours/min d'une roue montée sur un axe horizontal et dont la moitié au moins est immergée dans un bain chauffé à la température souhaité (en l'occurrence 50°C) ; la fixation sur cette roue de récipients fermés, en acier inoxydable, ayant une contenance de 550 ml chacun, un diamètre de 75 mm et une hauteur de 125 mm, le fond des récipients étant à 45 mm de l'axe de l'arbre. Ces récipients sont fixés de manière à être perpendiculaires à l'axe du rotor ; les échantillons textiles sont disposés dans ces petits récipients en présence d'eau, des billes d'acier calibrées de 6 mm de diamètre sont ajoutées afin d'augmenter les turbulences et l'abrasion en cours de lavage. Au bout d'un temps d'agitation donné, les échantillons sont prélevés, séchés (12 heures à température ambiante 23 °C) et l'effet perlant mesuré par le test précédemment décrit. Les mêmes échantillons sont ensuite replacés dans la machine d'essai GIROWASH pour poursuite de l'expérience.

- Résultats expérimentaux :

  Les résultats montrent clairement que l'article textile traité par la composition C1 selon l'invention conserve ses propriétés d'hydrofugation dans le temps, alors que le traitement classique par la composition C2 selon l'art antérieur voit ses performances diminuer de manière significatives au cours des lavages.

Ratio (Quantité retenue sur l'échantillon textile après x heures de lavage / Quantité retenue avant lavage)

| Composition: | Taux dans la solution | Traitement Thermique | Durée de Lavage : | | | | | |
|---|---|---|---|---|---|---|---|---|
| | | | 0 H | 4 H | 8H | 11 H | 15 H | 38 H |
| C1 | 5 % | - | 1 | 0,83 | 0,98 | 0,63 | 0,76 | 0,43 |
| C1 | 5% | 3min-150°C | 1 | 0,94 | 1,24 | 1,53 | 1,12 | 0,56 |
| C1 | 10% | - | 1 | 1,90 | 1,28 | 1,21 | 1,34 | 1,14 |
| C1 | 10% | 3min-150°C | 1 | 13 | 1,6 | - | 1,35 | 0,40 |
| C2 | Spray | - | 1 | 0,83 | 1,22 | 1,13 | 2,21 | 3,22 |
| C2 | Spray | 3min-150°C | 1 | 3,53 | 4,47 | 2,84 | 5,16 | 3,84 |

Note attribuée au Spray Test (%)

| Composition : | Taux dans la solution | Traite-ment Thermique | Durée de Lavage : | | | | | |
|---|---|---|---|---|---|---|---|---|
| | | | 0 H | 4 H | 8H | 11 H | 15 H | 38 H |
| C1 | 5% | - | 80 | 80 | 80 | 80 | 80 | 88 |
| C1 | 5% | 3min-150°C | 90 | 80 | 85 | 80 | 80 | 85 |
| C1 | 10% | - | 80 | 80 | 80 | 80 | 80 | 85 |
| C1 | 10% | 3min-150°C | 95 | 80 | 82 | 80 | 80 | 95 |
| C2 | Spray | - | 98 | 90 | 85 | 88 | 80 | 72 |
| C2 | Spray | 3min-150°C | 92 | 85 | 82 | 80 | 75 | 70 |

EXEMPLE 2

Hydrophobie durale avec teinture.

On part de la même composition C1 qui est ici diluée à 14% (en poids) dans l'heptane.

Le textile utilisé est un tricot en Polyamide 6.6 du type tricot piqué réalisé sur machine de tricotage circulaire simple fonture avec un fil PA6.6 140 dtex 102 brins vanisé une chute sur deux.

Dans cette exemple on procède à un test de résistance à la teinture. Le protocole de traitement est le suivant : imprégnation, essorage, séchage à température ambiante (23 °C), puis traitement thermique de 10 minutes à 150 °C).

Résultats expérimentaux :

- Un échantillon de l'article textile traité par la composition C1 a été teint en machine de teinture de laboratoire Mathis Labomat. Le rapport de bain était de 1/50 et les produits auxiliaires suivants ont été utilisés : acétate de sodium 0.5 g/l ; Sandogene CN 1 % ; Sandogene NH 1%. Le colorant Bleu Nylosan N5GL a été utilisé à la dose de 1,2 %. La montée en température du bain a été assurée à la vitesse de 1,5 °C/min et la température maximale atteinte a été de 98 °C. La durée totale de la teinture a été de 45 minutes.

- L'échantillon ressort du bain entièrement teint : il a conservé en majeure partie ses propriétés de déperlance (puisque sa cotation en Spray Test est passée de 90% à 80%).

L'échantillon est ensuite soumis à une série de cycle de lavages en machine à 50 °C pendant une durée totale de 8 heures. A l'issue de ceux-ci, il conserve des propriétés de déperlance avec une cotation à 80 % au Spray Test.

EXEMPLE 3

Hydrophobie durable - Tenue au lavage en machine industrielle.

1) Formulation silicone liquide réticulable selon l'invention (composition C3) :

Elle présente la constitution suivante (les parties sont données en poids) :

- A : mélange de :
  - résine MDT hydroxylée ayant 0,5 % d'OH en poids et constituée de 62 % en poids de motifs $CH_3SiO_{3/2}$, 24 % en poids de motifs $(CH_3)_2$ $SiO_{2/2}$ et 14 % en poids de motifs $(CH_3)_3$ $SiO_{1/2}$ : 47 parties ; et de
  - résine MQ hydroxylée ayant 2 % d'OH en poids et constituée de 45 % en poids de motifs $SiO_{4/2}$ et 55.% en poids de motifs $(CH_3)_3$ $SiO_{1/2}$ : 7 parties ;
- B : mélange de :
  - tris(3-(trimethoxysilyl)propyl)isocyanurate : 7 parties
  - zirconate de n-propyle (Pr) de formule Zr(Opr) 4 : 20 parties
  - titanate de n-butyle (Bu) de formule $Ti(OBu)_4$ : 2 parties ; et de
  - silicate d'éthyle (Et) de formule $Si(OEt)_4$ : 4 parties ;
- C-1 : mélange de :
  - résine MDT hydroxylée ayant 0,5 % d'OH en poids et constituée de 62 % en poids de motifs $CH_3SiO_{3/2}$, 24 % en poids de motifs $(CH_3)_2$ $SiO_{2/2}$ et 14 % en poids de motifs $(CH_3)_3$ $SiO_{1/2}$ : 10 parties ; et de
  - huile silicone linéaire hydroxylée ayant de l'ordre de 0,01 % d'OH en poids et constituée à 100 % en poids de motifs $(CH_3)_2$ $SiO_{2/2}$, ayant une viscosité de 4 000 000 mPa.s : 20 parties ;
- D : White Spirit : 883 parties.

2) Formulation silicone liquide réticulable selon l'invention (composition C4) :

Elle présente la constitution suivante (les parties sont données en poids) :

- A : mélange de :
  - résine MDT hydroxylée ayant 0,5 % d'OH en poids et constituée de 62 % en poids de motifs $CH_3SiO_{3/2}$, 24 % en poids de motifs $(CH_3)_2$ $SiO_{2/2}$ et 14 % en poids de motifs $(CH_3)_3$ $SiO_{1/2}$: 95 parties ; et de
  - résine MQ hydroxylée ayant 2 % d'OH en poids et constituée de 45 % en poids de motifs $SiO_{4/2}$ et 55.% en poids de motifs $(CH_3)_3$ $SiO_{1/2}$: 14 parties ;
- B : mélange de :
  - tris(3-(trimethoxysilyl)propyl)isocyanurate : 11 parties
  - zirconate de n-propyle (Pr) de formule $Zr(Opr)_4$ : 41 parties
  - titanate de n-butyle (Bu) de formule $Ti(OBu)_4$ : 4 parties ; et de
  - silicate d'éthyle (Et) de formule $Si(OEt)_4$ : 8 parties ;
- C-1 : mélange de :

- résine MDT hydroxylée ayant 0,5 % d'OH en poids et constituée de 62 % en poids de motifs $CH_3SiO_{3/2}$, 24 % en poids de motifs $(CH_3)_2$ $SiO_{2/2}$ et 14 % en poids de motifs $(CH_3)_3$ $SiO_{1/2}$ : 20 parties ; et de
- huile silicone linéaire hydroxylée ayant de l'ordre de 0,01 % d'OH en poids et constituée à 100 % en poids de motifs $(CH_3)_2$ $SiO_{2/2}$, ayant une viscosité de 4 000 000 mPa.s : 80 parties ;
- poids et constituée à 100 % en poids de motifs $(CH_3)_2$ $SiO_{2/2}$: 80 parties.

- D : White Spirit : 727 parties.

3) Formulation silicone liquide réticulable selon l'invention (composition C5) :

Elle présente la constitution suivante (les parties sont données en poids) :

- A : mélange de :
  - résine MDT hydroxylée ayant 0,5 % d'OH en poids et constituée de 62 % en poids de motifs $CH_3SiO_{3/2}$, 24 % en poids de motifs $(CH_3)_2$ $SiO_{2/2}$ et 14 % en poids de motifs $(CH_3)_3$ $SiO_{1/2}$ : 40 parties ; et de
  - résine MQ hydroxylée ayant 2 % d'OH en poids et constituée de 45 % en poids de motifs $SiO_{4/2}$ et 55.% en poids de motifs $(CH_3)_3$ $SiO_{1/2}$ : 6 parties ;
- B : mélange de :
  - 3-aminopropyl trimethoxy silane : 8 parties
  - zirconate de n-propyle (Pr) de formule $Zr(Opr)_4$ : 18 parties
  - titanate de n-butyle (Bu) de formule $Ti(OBu)_4$ : 2 parties ; et de
  - silicate d'éthyle (Et) de formule $Si(OEt)_4$ : 3 parties ;
- C-1 : mélange de :
  - résine MDT hydroxylée ayant 0,5 % d'OH en poids et constituée de 62 % en poids de motifs $CH_3SiO_{3/2}$, 24 % en poids de motifs $(CH_3)_2$ $SiO_{2/2}$ et 14 % en poids de motifs $(CH_3)_3$ $SiO_{1/2}$ ; 10 parties ; et de
  - huile silicone linéaire hydroxylée ayant de l'ordre de 0,01 % d'OH en poids et constituée à 100 % en poids de motifs $(CH_3)_2$ $SiO_{2/2}$, ayant une viscosité de 4 000 000 mPa.s : 18 parties ;
- D : White Spirit : 895 parties.

4) Formulation silicone liquide réticulable selon l'invention (composition C6) :

Elle présente la constitution suivante (les parties sont données en poids) :

- A : résine MDT hydroxylée ayant 0,8 % d'OH en poids et constituée de 23 % en poids de motifs $CH_3SiO_{3/2}$, 75 % en poids de motifs $(CH_3)_2$ $SiO_{2/2}$ et 2 % en poids de motifs $(CH_3)_3$ $SiO_{1/2}$ : 58 parties
- B : mélange de :
  - 3-aminopropyl trimethoxy silane : 8 parties; et de
  - zirconate de n-propyle (Pr) de formule $Zr(Opr)_4$ : 18 parties
- C-1 : mélange de :
  - résine MDT hydroxylée ayant 0,8 % d'OH en poids et constituée de 23 % en poids de motifs $CH_3SiO_{3/2}$, 75 % en poids de motifs $(CH_3)_2$ $SiO_{2/2}$ et 2 % en poids de motifs $(CH_3)_3$ $SiO_{1/2}$ : 20 parties ; et de
  - huile silicone linéaire hydroxylée ayant de l'ordre de 0,01 % d'OH en poids et constituée à 100 % en poids de motifs $(CH_3)_2$ $SiO_{2/2}$. ayant une viscosité de 4 000 000 mPa.s : 25 parties ;
- D : White Spirit : 871 parties.

5/ Formulation silicone liquide réticulable selon l'invention (composition C7) :

Elle présente la constitution suivante (les parties sont données en poids) :

- A : résine MDT hydroxylée ayant 0,5 % d'OH en poids et constituée de 62 % en poids de motifs $CH_3SiO_{3/2}$, 24 % en poids de motifs $(CH_3)_2$ $SiO_{2/2}$ et 14 % en poids de motifs $(CH_3)_3$ $SiO_1$/2 : 100 parties
- B : mélange de :

  - tris(3-(trimethoxysilyl)propyl)isocyanurate : 13 parties; et de
  - zirconate de n-propyle (Pr) de formule Zr(Opr) $_4$ : 41 parties

- C-1 : mélange de :

  - résine MDT hydroxylée ayant 0,5 % d'OH en poids et constituée de 62 % en poids de motifs $CH_3SiO_{3/2}$, 24 % en poids de motifs $(CH_3)_2$ $SiO_{2/2}$ et 14 % en poids de motifs $(CH_3)_3$ $SiO_{1/2}$: 41 parties ; et de
  - huile silicone linéaire hydroxylée ayant de l'ordre de 0,01 % d'OH en poids et constituée à 100 % en poids de motifs $(CH_3)_2$ $SiO_{2/2}$, ayant une viscosité de 4 000 000 mPa.s : 62 parties ;

- D : White Spirit : 743 parties.

6) Formulation de comparaison (composition C8) :

Les performances des compositions C3 à C7 sont comparées à celles d'une composition C8 conventionnelle (traitements connus et commercialisés sous les marques « Scotch Guard » ou «Teflon ») connu pour ses excellentes propriétés hydrofuges. Il est appliqué par une voie solvant selon le protocole recommandé par le fournisseur.

7) Tests d'hydrofugation permanente :

L'article textile traité utilisé est un tissu bi-stretch à base de Polyamide 6.6 (80% en poids) et d'élasthanne (20%). Cette surface textile est tissée en chaîne et trame à partir de fil guipé élasthanne 44 dtex 1 brin et de polyamide 6.6 44 dtex 34 brins. L'élasticité de la surface textile obtenue est de 100 % dans chaque direction et le poids surfacique est de l'ordre de 130 $g/m^2$.

L'article textile est traité par foulardage avec les compositions C3 à C8. Il subit un traitement thermique à 150 °C pendant 2 minutes, puis il est stocké à température ambiante pendant 8 heures avant essais.

- La mesure de l'effet perlant est effectuée par le test de déperlance normalisé connu sous le nom de « Spray-Test » (AATC Test Method 22-1996).

- Pour tester la durabilité du traitement, une machine de lavage industriel type WASHCATOR (Electrolux) a été utilisée pour un lavage en continu à 50°C pendant des durées variables de 8, 16, et 24 Heures.

- Résultats expérimentaux :

Les résultats montrent clairement que l'article textile traité par les compositions C3 à C7 selon l'invention conserve ses propriétés d'hydrofugation dans le temps et au cours du lavage à 50°C dans des conditions d'abrasion en milieu humide sévères, alors que le traitement classique par la composition C8 selon l'art antérieur voit ses performances s'effondrer dés les premières heures de lavage.

Note attribuée au Spray Test après x heures de lavage (%)

| Composition | Traitement Thermique | Durée de lavage : | | | |
|---|---|---|---|---|---|
| | | 0 H | 8 H | 16 H | 24 H |
| C3 | 2min 50°C | 100 | 90 | 80 | 70 |
| C4 | 2min 50°C | 100 | 90 | 80 | 80 |
| C5 | 2min 50°C | 100 | 80 | 70 | 70 |
| C6 | 2min 50°C | 100 | 80 | 70 | 70 |

(suite)

| Composition | Traitement Thermique | Durée de lavage : | | | |
|---|---|---|---|---|---|
| | | 0 H | 8 H | 16 H | 24 H |
| C7 | 2min 50°C | 100 | 80 | 70 | 70 |
| C8 | 2min 50°C | 100 | 50 | 0 | 0 |

Quantité d'eau retenue sur l'échantillon textile après x heures de lavage (en g)

| Composition | Traitement thermique | Durée de lavage : | | | |
|---|---|---|---|---|---|
| | | 0 H | 8 H | 16 H | 24 H |
| C3 | 2min 50°C | 0,31 | 0,33 | 0,59 | 0,93 |
| C4 | 2min 50°C | 0,46 | 0,48 | 0,58 | 0,81 |
| C5 | 2min 50°C | 0,24 | 0,39 | 0,65 | 0,90 |
| C6 | 2min 50°C | 0,42 | 0,45 | 0,68 | 0,81 |
| C7 | 2min 50°C | 0,32 | 0,62 | 0,77 | 1,04 |
| C8 | 2min 50°C | 0,30 | 1,18 | 1,33 | 1,62 |

EXEMPLE 4

Oléophobie permanente

1) Formulation silicone liquide réticulable selon l'invention (C9):

Elle présente la constitution suivante (les parties sont données en poids) :

- A : mélange de :
  - résine MDT hydroxylée ayant 0,5 % d'OH en poids et constituée de 62 % en poids de motifs $CH_3SiO_{3/2}$, 24 % en poids de motifs $(CH_3)_2$ $SiO_{2/2}$ et 14 % en poids de motifs $(CH_3)_3$ $SiO_{1/2}$ : 3,50 parties ; et de
  - résine MQ hydroxylée ayant 2 % d'OH en poids et constituée de 45 % en poids de motifs $SiO_{4/2}$ et 55.% en poids de motifs $(CH_3)_3$ $SiO_1/2$ : 0,50 parties ;
- B : mélange de :
  - titanate de n-butyle (Bu) de formule $Ti(OBu)_4$ : 2,25 parties ; et de
  - silicate d'éthyle (Et) de formule $Si(OEt)_4$ : 0,25 parties ;
- C-2 : alcool perfluoré de formule $C_8F_{17}C_2H_4$-OH (produit commercialisé, sous la référence FORALKYL EOH8, par la société ATOFINA) : 2,0 parties ;
- D : White Spirit : 89,25 parties.

2) Formulation de comparaison (C10) :

- alcool perfluoré de formule $C_8F_{17}$-$C_2H_4$-OH : 10 parties ;
- White Spirit : 90 parties.

3) Test de l'oléophobie

- Le textile traité utilisé est un textile tissé en Polyamide 6.6 et élasthanne (80/20) . Il est constitué de fils élastiques

en chaîne et trame à base d'un élasthanne 44 dTex guipé par un bout de PA 6.6 44 dTex / 34 brins. Ces surfaces textiles présentent une élasticité bidirectionnelle importante (100% d'élongation dans les deux directions) et un poids spécifique de 130 g/$m^2$.

- Le textile est traité par foulardage par la solution. Il subit un séchage à température ambiante pendant quelques minutes puis est traité thermiquement pendant 2 minutes à 150°C.

- La mesure du caractère oléophobe est réalisée par le test normalisé (AATC Test Method 118-1997) connu sous le nom de "Oil repellency: Hydrocarbon Resistance Test" : Le test consiste a déposer des gouttes de liquide de tension interfaciale décroissante sur le textile et a déterminer le liquide LH à partir duquel l'étalement des gouttes est observé. Une note de 0 à 8 est attribuée en fonction du LH obtenu, 0 lorsque l'huile Kaydol s'étale (Huile de vaseline, faible caractère oléophobe), 3 lorsque le n-tétradécane s'étale (oléphobie marquée) et 8 lorsque le n-Heptane ne s'étale plus (oléophobie très marquée).

- Pour tester la durabilité du traitement, les échantillons sont lavés à 3 reprises à 50°C dans une machnie à laver commerciale (marque Miele, modèle Novotronic 824) en présence d'un détergent normalisé ( ECE Non Phosphaté - Reference Detergent A - dont la formulation est donnée dans BS1006 : 1990 : UK-T0). La quantité de détergent utilisée est de 96g ( le volume d'eau utilisée par la machine étant de 12 1, cette quantité correspond à une concentration classique de 8 g/l ).

4) Résultats expérimentaux :

Les résultats montrent que le textile traité par la formulation (C9), fonctionnalisée oléophobe, montre bien des propriétés d'oléophie inexistante pour le textile non traité. Les résultats montrent aussi que le textile traité par la formulation (C9) conserve ses propriétés d'oléophobie au cours des lavages, alors que le textile traité uniquement par le composé fluoré, voit ses performances disparaître totalement.

Mesures de l'oléophobie (note obtenun au test Oil Repellency) :

| Composition | Traitement | Avant lavage | Après 3 cycles de lavages |
|---|---|---|---|
| Non Traité | | 0 | 0 |
| C9 | 2min à 150°C | 3 | 3 |
| C10 | 2min à 150°C | 1 | 0 |

## Revendications

**1.** Utilisation d'au moins une formulation silicone liquide réticulable comme base d'enduction de matériau textile:

- pour permettre, en réticulant autour des fils, fibres et/ou filaments constitutifs du matériau textile, d'assurer une large couverture de protection du matériau textile, protection peu dépendante de la nature dudit matériau du fait qu'elle ne nécessite peu ou pas de points d'ancrage ;
- pour permettre, en faisant une gaine silicone réticulant chimiquement, d'assurer une protection durable du matériau textile en lui conférant une excellente résistance vis à vis des agressions rencontrées lors de l'usage ;
- pour permettre, en apportant des fonctionnalités spécifiques supplémentaires d'usage, de former des revêtements possédant des propriétés d'usage telles que notamment la douceur, l'hydrophobie, l'oléophobie, l'hydrophilie, un effet antistatique ; et
- pour permettre, en raison de la nature spéciale des constituants de la formulation, de réaliser les opérations de dépôt de la formulation liquide et de sa réticulation à n'importe quel endroit des processus d'élaboration et/ou de rénovation et/ou d'entretien du matériau textile en matières naturelles et/ou synthétiques,

**caractérisée en ce que** ladite formulation silicone liquide réticulable est constituée de :

A - un système générateur de réseau silicone filmogène comprenant au moins une résine polyorganosiloxane (POS) présentant, par molécule, d'une part au moins deux motifs siloxyles différents choisis parmi ceux de type $(R^3)_3SiO_{0,5}$ (motif M), $(R^3)_2SiO$ (motif D), $R^3SiO_{1,5}$ (motif T) et $SiO_2$ (motif Q), l'un des motifs étant un motif T ou un motif Q, avec les radicaux $R^3$ identiques ou différents choisis parmi les radicaux

alkyles linéaires ou ramifiés en $C_1$ - $C_6$, les radicaux alcényles en $C_2$ - $C_4$, phényle, trifluoro-3,3,3 propyle et d'autre part au moins trois groupements hydrolysables/condensables de types OH et/ou $OR^1$ où $R^1$ est un radical alkyle linéaire ou ramifié en $C_1$ à $C_6$;
B - un système promoteur d'accrochage dudit réseau sur la surface du matériau textile consistant dans :

- soit B-1 au moins un alkoxyde métallique de formule générale :

$$M[(OCH_2CH_2)_a\ OR^2]_n \qquad (I)$$

dans laquelle :

- M est un métal choisi dans le groupe formé par : Ti, Zr, Ge, Si, Mn et Al ;
- n = valence de M ;
- les substituants $R^2$, identiques ou différents, représentent chacun un radical alkyle, linéaire ou ramifié, en $C_1$ à $C_{12}$ ;
- a représente zéro, 1 ou 2 ;
- avec les conditions selon lesquelles, quand le symbole a représente zéro, le radical alkyle $R^2$ possède de 2 à 12 atomes de carbone, et quand le symbole a représente 1 ou 2, le radical alkyle $R^2$ possède de 1 à 4 atomes de carbone ;

- soit B-2 au moins un polyalkoxyde métallique découlant de l'hydrolyse partielle des alkoxydes monomères de formule (I) mentionnée supra dans laquelle le symbole $R^2$ a la signification précitée avec le symbole a représentant zéro ;
- soit une association de B-1 et B-2 ;
- soit B-3 une association de B-1 et/ou B-2 avec :

- B-3/1 au moins un organosilane éventuellement alkoxylé contenant, par molécule, au moins un groupe alcényle en $C_2$-$C_6$,
- et/ou B-3/2 au moins un composé organosilicié comprenant au moins un radical époxy, amino, uréido, isocyanato et/ou isocyanurate ;

C - un additif fonctionnel consistant dans :

- soit C-1 choisi parmi :

- les polyalkoxysilanes de formule :

$$(R^1)_bSi[(OCH_2CH_2)_a\ OR^2]_{4-b} \qquad (II)$$

dans laquelle :

+ les substituant $R^1$ et $R^2$ et le symbole a sont tels que définis supra à propos de la description des constituants A et B ;
+ b est 1,2 ou 3;

- les diorganopolysiloxanes essentiellement linéaire comprenant un groupement hydroxyle à chaque extrémité de chaîne, de formule :

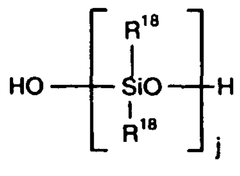

(III)

dans laquelle :

+ les substituants $R^{18}$, identiques ou différents, représentent chacun un radical monovalent hydrocarboné saturé ou non en $C_1$ à $C_{13,}$ substitué ou non substitué, aliphatique, cyclanique ou aromatique ;
+ j a une valeur suffisante pour conférer aux diorganopolysiloxanes de formule (III) une viscosité dynamique à 25°C allant de 1.000 à 10.000.000 mPa.s ; - les copolymères POS-polyéther issus notamment de la réaction :
d'un polyéther de formule :

$$CH_2{=}CH\text{-}CH_2\text{-}[OCH_2CH_2]_v\text{-}[OCH_2CH(CH_3)]_w\text{-}OH$$

sur une huile POS de formule :

$$Me_3SiO(Me_2SiO)_{x'}(MeHSiO)_{y'}SiMe_3,$$

+ avec Me = méthyle ;
+ avec v et w différents de 0 et notamment compris entre 5 et 30 ;
+ avec x' allant de 20 à 150 ;
+ avec y' allant de 2 à 10 ;
+ le copolymère pouvant être additionné d'un additif tel qu'un polyéther libre ;

- les résines POS hydroxylées comprenant dans leur structure des motifs siloxyles T et éventuellement M et/ou éventuellement D tels que définis supra à propos des résines A ;
- les résines POS hydroxylées obtenues notamment :

→ par hydrolyse d'un alkoxysilane S substitué par des fonctions FU ;
→ par homocondensation des silanes S hydrolysés ;
→ et par « stripping » entraînement à la vapeur des hydrolysats dérivant des FU, et

- des mélanges des composés organosiliciques précités.

• soit C-2 choisi parmi :

- les alcools fluorés de formule :

$$R^{19}\text{ - }OH \qquad (IV)$$

où $R^{19}$ représente un radical aliphatique, linéaire ou ramifié, ayant de 2 à 20 atomes de carbone, lesdits atomes de carbone étant substitués par au moins un atome de fluor et éventuellement par au moins un ou atome d'hydrogène, et

- les polyéthers non bloqués de formule :

$$R^{20}\text{-}[OCH_2CH_2]_v\text{-}[OCH_2CH(CH_3)]_w\text{-}OH \qquad (V)$$

où $R^{20}$ représente un radical alkyle, linéaire ou ramifié, ayant de 1 à 4 atomes de carbone et les symboles v et w sont tels que définis supra.

• soit un mélange de C-1 et C-2 ;

D - éventuellement un système additif non réactif consistant dans : (i) au moins un solvant/diluant organique et/ou un composé organosilicié non réactif ; (2i) et/ou dans de l'eau dans le cas de la mise en oeuvre d'une formulation silicone liquide en émulsion ou en dispersion aqueuse ; et

► avec la condition selon laquelle on engage (les parties sont données en poids) :

- pour 100 parties de constituant A,

- de 0,5 à 200 parties de constituant B,
- 1 à 1000 parties de constituant C, et
- de 0 à 10 000 parties de constituant D

**2.** Utilisation selon la revendication 1, **caractérisée en ce que**, dans la définition du constituant A, le radical R' est un radical alkyle linéaire ou ramifié en $C_1$ à $C_3$.

**3.** Utilisation selon les revendications 1 ou 2, **caractérisée en ce que** l'on engage comme constituant A les mélanges A-3 :

- d'au moins une résine présentant, dans sa structure, au moins deux motifs siloxyles différents choisis parmi ceux de formule $(R^3)_3SiO_{0,5}$ (motif M), $(R^3)_2SiO$ (motif D) et $R^3SiO_{1,5}$ (motif T), l'un au moins de ces motifs étant un motif T, les groupes OH et/ou $OR^1$ pouvant être portées par les motifs M, D et/ou T et la teneur pondérale en groupes OH et/ou $OR^1$ étant comprise entre 0,2 et 10 % en poids, et
- d' au moins une autre résine présentant, dans sa structure, au moins deux motifs siloxyles différents choisis parmi ceux de formule $(R^3)_3SiO_{0,5}$ (motif M), $(R^3)_2SiO$ (motif D) et $R^3SiO_{1,5}$ (motif T) et $SiO_2$ (motif Q), l'un au moins de ces motifs étant un motif Q, les groupes OH et/ou $OR^1$ pouvant être portées par les motifs M, D et/ou T et la teneur pondérale en groupes OH et/ou $OR^1$ étant comprise entre 0,2 et 10 % en poids,
- les radicaux $R^3$ présents dans ces résines étant identiques ou différents et étant choisis parmi les radicaux alkyles linéaires ou ramifiés en $C_1$ - $C_6$, les radicaux alcényles en $C_2$ - $C_4$, phényle, trifluoro-3,3,3 propyle.

**4.** Utilisation selon l'une quelconque des revendications 1 à 3, **caractérisée en ce que** l'on engage :

- comme constituant B-1 : les titanates d'alkyles comme le titanate d'éthyle, le titanate de propyle, le titanate d'isopropyle, le titanate de butyle, le titanate d'éthyl-2 hexyle, le titanate d'octyle, le titanate de décyle, le titanate de dodécyle, le titanate de β-méthoxyéthyle, le titanate de β-éthoxyéthyle, le titanate de β-propoxyéthyle, le titanate de formule $Ti[(OCH_2CH_2)_2\ OCH_3]_4$ ; les zirconates d'alkyles comme le zirconate de propyle, le zirconate de butyle ; les silicates d'alkyles comme le silicate de méthyle, le silicate d'éthyle, le silicate d'isopropyle, le silicate de n-propyle ; et des mélanges de ces produits;
- comme constituant B-2 : les polytitantes B-2 provenant de l'hydrolyse partielle des titanates d'isopropyle, de butyle ou d'éthyl-2 hexyle ; les polyzirconates B-2 provenant de l'hydrolyse partielle des zirconates de propyle et de butyle ; les polysilicates B-2 provenant de l'hydrolyse partielle des silicates d'éthyle et d'isopropyle ; et des mélanges de ces produits.

**5.** Utilisation selon l'une quelconque des revendications 1 à 4, **caractérisée en ce que** l'on engage :

- pour 100 parties de constituant A,
- de 0,5 à 100 parties de constituant B,
- 1 à 300 parties de constituant C, et
- de 0 à 5 000 parties de constituant D.

**6.** Utilisation selon l'une quelconque des revendications 1 à 5, **caractérisée en ce que** les formulations silicones liquides réticulables utilisées comme base d'enduction textile sont préparées sous forme concentrées puis sont diluées au moment de leur emploi avec un diluant organique, un solvant organique ou de l'eau à raison de 1 à 30 parties en poids de formulation pour 100 parties en poids de solvant, diluant ou eau.

**7.** Utilisation selon l'une quelconque des revendications 1 à 6, **caractérisée en ce qu'**elle est réalisée en mettant en contact directement les articles textiles comprenant au moins une surface textile avec la base d'enduction de matériau textile, en opérant à n'importe quel moment des processus d'élaboration et/ou de rénovation et/ou d'entretien du matériau textile.

**8.** Utilisation selon l'une quelconque des revendications 1 à 6, **caractérisée en ce qu'**elle est réalisée en mettant en contact les fils, fibres et/ou filaments avec la base d'enduction textile à n'importe quel moment des processus d'élaboration du matériau textile.

## Claims

1. Use of at least one crosslinkable liquid silicone formulation as textile material coating base:

- for making it possible, by crosslinking around the constituent yarns, fibres and/or filaments of the textile material, to provide a broad protective coverage of the textile material, which protection is not very dependent on the nature of the said material because it requires few or no anchoring points;
- for making it possible, by forming a chemically crosslinking silicone sheath, to provide long-lasting protection of the textile material by conferring thereon excellent resistance with regard to the attacks encountered during use;
- for making it possible, by introducing additional specific applicational functional groups, to form coatings having applicational properties, such as in particular softness, hydrophobicity, oleophobicity, hydrophilicity or an antistatic effect; and
- for making it possible, because of the special nature of the constituents of the formulation, to carry out the operations of depositing the liquid formulation and of crosslinking it at any point in the processes for preparing and/or restoring and/or maintaining the textile material made of natural or synthetic materials,

**characterized in that** the said crosslinkable liquid silicone formulation is composed of:

A - a system for creating a film-generating silicone network comprising at least one polyorganosiloxane (POS) resin exhibiting, per molecule, on the one hand, at least two different siloxyl units chosen from those of $(R^3)_3SiO_{0.5}$ (M unit), $(R^3)_2SiO$ (D unit), $R^3SiO_{1.5}$ (T unit) and $SiO_2$ (Q unit) type, one of the units being a T unit or a Q unit, with the identical or different $R_3$ radicals chosen from $C_1$-$C_6$ alkyl radicals which are linear or branched, $C_2$-$C_4$ alkenyl radicals, the phenyl radical or the 3,3,3-trifluoropropyl radical, and, on the other hand, at least three hydrolysable/condensable groups of OH and/or $OR^1$ types, where $R^1$ is a linear or branched $C_1$ to $C_6$ alkyl radical;

B - a system for promoting the attachment of the said network to the surface of the textile material comprising:

• either B-1 at least one metal alkoxide of general formula:

$$M[(OCH_2CH_2)_aOR_2]_n \qquad (I)$$

in which:

- M is a metal chosen from the group formed by: Ti, Zr, Ge, Si, Mn and Al;
- n = valency of M;
- the $R^2$ substituents, which are identical or different, each represent a linear or branched $C_1$ to $C_{12}$ alkyl radical;
- a represents zero, 1 or 2;
- with the conditions according to which, where the symbol a represents zero, the alkyl radical $R^2$ has from 2 to 12 carbon atoms and, when the symbol a represents 1 or 2, the alkyl radical $R^2$ has from 1 to 4 carbon atoms;

• or B-2 at least one metal polyalkoxide resulting from the partial hydrolysis of the monomeric alkoxides of formula (I) mentioned above in which the symbol $R^2$ has the abovementioned meaning with the symbol a representing zero;
• or a combination of B-1 and B-2;
• or B-3 a combination of B-1 and/or B-2 with:

- B-3/1 at least one optionally alkoxylated organosilane comprising, per molecule, at least one $C_2$-$C_6$ alkenyl group,
- and/or B-3/2 at least one organosilicon compound comprising at least one epoxy, amino, ureido, isocyanato and/or isocyanurate radical;

C - a functional additive comprising:

• either C-1 chosen from:

- polyalkoxysilanes of formula:

$$(R^1)_bSi[(OCH_2CH_2)_aOR_2]_{4-b} \qquad (II)$$

in which:

+ the substituents $R^1$ and $R^2$ and the symbol a are as defined above with respect to the description of the constituents A and B;
+ b is 1, 2 or 3;

- essentially linear diorganopolysiloxanes comprising a hydroxyl group at each chain end, of formula:

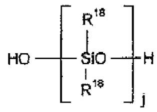 (III)

in which:

+ the $R^{18}$ substituents, which are identical or different, each represent a saturated or unsaturated, substituted or unsubstituted, aliphatic, cyclanic or aromatic monovalent $C_1$ to $C_{13}$ hydrocarbonaceous radical;
+ j has a value sufficient to confer, on the diorganopolysiloxanes of formula (III), a dynamic viscosity at 25°C ranging from 1 000 to 10 000 000 mPa·s;

- POS-polyether copolymers resulting in particular from the reaction:

of a polyether of the formula:

$$CH_2=CH-CH_2[OCH_2CH_2]_v-[OCH_2CH(CH_3)\ ]_w-OH$$

with a POS oil of formula:

$$Me_3SiO(Me_2SiO)_{x'}\ (MeHSiO)_{y}'SiMe_3,$$

+ with Me = methyl;
+ with v and w other than 0 and in particular between 5 and 30;
+ with x' ranging from 20 to 150;
+ with y' ranging from 2 to 10;
+ it being possible for the copolymer to have added to it an additive, such as a free polyether;

- hydroxylated POS resins comprising, in their structure, T and optionally M and/or optionally D siloxyl units as defined above with respect to the resins A;
- hydroxylated POS resins obtained in particular:

→ by hydrolysis of an alkoxysilane S substituted by UF functional groups;
→ by homocondensation of hydrolysed silanes S;
→ and by stripping (entrainment with steam) the hydrolysates deriving from the UPs, and

- mixtures of the abovementioned organosilicon compounds,

• or C-2 chosen from:

- fluorinated alcohols of formula:

$$R^{19}-OH \qquad (IV)$$

where $R^{19}$ represents a linear or branched aliphatic radical having from 2 to 20 carbon atoms, the said carbon atoms being substituted by at least one fluorine atom and optionally by at least one hydrogen atom, and

- unblocked polyethers of formula:

$$R^{20}\text{-}[OCH_2CH_2]_v\text{-}[OCH_2CH\,(CH_3)]_w\text{-}OH \qquad (V)$$

where $R^{20}$ represents a linear or branched alkyl radical having from 1 to 4 carbon atoms and the symbols v and w are as defined above,
• or a mixture of C-1 and C-2;

- D - optionally a nonreactive additive system comprising:

(i) at least one organic solvent/diluent and/or one nonreactive organosilicon compound; (2i) and/or water, in the case of the use of a liquid silicone formulation in aqueous dispersion or emulsion; and

► with the condition according to which use is made (the parts are given by weight):

- per 100 parts of constituent A,
- of 0.5 to 200 parts of constituent B,
- of 1 to 1 000 parts of constituent C, and
- of 0 to 10 000 parts of constituent D.

**2.** Use according to Claim 1, **characterized in that**, in the definition of the constituent A, the $R^1$ radical is a linear or branched $C_1$ to $C_3$ alkyl radical.

**3.** Use according to Claim 1 or Claim 2, **characterized in that** use is made, as constituent A, of the mixtures A-3:

- of at least one resin exhibiting, in its structure, at least two different siloxyl units chosen from those of formula $(R^3)_3SiO_{0.5}$ (M unit), $(R^3)_2SiO$ (D unit) and $R^3SiO_{1.5}$ (T unit), at least one of these units being a T unit, it being possible for the OH and/or $OR^1$ groups to be carried by the M, D and/or T units and the content by weight of OH and/or $OR^1$ groups being between 0.2 and 10% by weight, and
- of at least one other resin exhibiting, in its structure, at least two different siloxyl units chosen from those of formula $(R^3)_3SiO_{0.5}$ (M unit), $(R^3)_2SiO$ (D unit) and $R^3SiO_{1-5}$ (T unit) and $SiO_2$ (Q unit), at least one of these units being a Q unit, it being possible for the OH and/or $OR^1$ groups to be carried by the M, D and/or T units and the content by weight of OH and/or $OR^1$ groups being between 0.2 and 10% by weight;
- the $R^3$ radicals present in these resins being identical or different and being chosen from $C_1$-$C_6$ alkyl radicals which are linear or branched, $C_2$-$C_4$ alkenyl radicals, the phenyl radical or the 3,3,3-trifluoropropyl radical.

**4.** Use according to any one of Claims 1 to 3, **characterized in that** use is made:

- as constituent B-1: of alkyl titanates, such as ethyl titanate, propyl titanate, isopropyl titanate, butyl titanate, 2-ethylhexyl titanate, octyl titanate, decyl titanate, dodecyl titanate, β-methoxyethyl titanate, β-ethoxyethyl titanate, β-propoxyethyl titanate or the titanate of formula $Ti[(OCH_2CH_2CH_2)_2OCH_3]_4$; alkyl zirconates, such as propyl zirconate or butyl zirconate; alkyl silicates, such as methyl silicate, ethyl silicate, isopropyl silicate or n-propyl silicate; and mixtures of these products;
- as constituent B-2: of polytitanates B-2 originating from the partial hydrolysis of isopropyl, butyl or 2-ethylhexyl titanates; polyzirconates B-2 originating from the partial hydrolysis of propyl and butyl zirconates; polysilicates B-2 originating from the partial hydrolysis of ethyl and isopropyl silicates; and mixtures of these products.

**5.** Use according to any one of Claims 1 to 4, **characterized in that** use is made:

- per 100 parts of constituent A,
- of 0.5 to 100 parts of constituent B,
- of 1 to 300 parts of constituent C, and
- of 0 to 5 000 parts of constituent D.

**6.** Use according to any one of Claims 1 to 5, **characterized in that** the crosslinkable liquid silicone formulations used as textile coating base are prepared in the concentrated form and are then diluted at the time of their use with an organic diluent, an organic solvent or water, in the proportion of 1 to 30 parts by weight of formulation per 100 parts by weight of solvent, diluent or water.

7. Use according to any one of Claims 1 to 6, **characterized in that** it is implemented by bringing the textile articles, comprising at least one textile surface, directly into contact with the textile material coating base, the operation being carried out at any point in the processes for preparing and/or restoring and/or maintaining the textile material.

8. Use according to any one of Claims 1 to 6, **characterized in that** it is implemented by bringing the yarns, fibres and/or filaments into contact with the textile coating base at any point in the processes for preparing the textile material.

## Patentansprüche

1. Verwendung mindestens einer flüssigen, vernetzbaren silikonzusammensetzung als Beschichtungsmittel für ein textiles Material:

- um, indem um Fäden, Fasern und/oder Filamente herum vernetzt wird, die textiles Material bilden, einen große Bedeckung zum Schutz des textilen Materials gewährleisten zu können, ein Schutz, der kaum von der Art des Materials abhängt, da er wenige oder keine Verankerungspunkte benötigt;
- um, indem eine chemisch vernetzende Silikonhülle hergestellt wird, einen dauerhaften Schutz des textilen Materials gewährleisten zu können, indem ihm eine ausgezeichnete Beständigkeit gegenüber Belastungen verliehen wird, die während der Nutzung auftreten;
- um, indem zusätzliche spezifische Anwendungsfunktionalitäten bereitgestellt werden, Beschichtungen bilden zu können, die Nutzungseigenschaften aufweisen, wie z. B. insbesondere Weichheit, Wasserabweisungsvermögen, Ölabweisungsvermögen, Wasseraufnahmevermögen, eine antistatische Wirkung; und
- um, aufgrund der besonderen Art der Bestandteile der Zusammensetzung, die Vorgänge zur Ablagerung der flüssigen Zusammensetzung und ihre Vernetzung an irgendeinem Punkt der Prozesse zur Herstellung und/oder Instandsetzung und/oder Instandhaltung des textilen Materials aus natürlichen oder synthetischen Materialien ausführen zu können,

**dadurch gekennzeichnet, dass** die flüssige, vernetzbare Silikonzusammensetzung gebildet wird aus:

A - einem System zur Erzeugung eines filmbildenden Silikonnetzwerks, umfassend mindestens ein Polyorganosiloxanharz (POS), das, je Molekül, einerseits mindestens zwei verschiedene siloxylierte Motive, ausgewählt aus jenen vom Typ $(R^3)_3SiO_{0.5}$ (Motiv M), $(R^3)_2SiO$ (Motiv D), $R^3SiO_{1.5}$ (Motiv T) und $SiO_2$ (Motiv Q), wobei eines der Motive ein Motiv T oder ein Motiv Q ist, wobei die Reste $R^3$, gleich oder verschieden, ausgewählt sind aus den geradkettigen oder verzweigtkettigen $C_1$-$C_6$-Alkylresten, den $C_2$-$C_4$-Alkenylresten, Phenyl, Trifluor-3,3,3-propyl und andererseits mindestens drei hydrolysierbare/kondensierbare Gruppen vom Typ OH und/oder $OR^1$ aufweist, worin $R^1$ ein geradkettiger oder verzweigtkettiger $C_1$-$C_6$-Alkylrest ist;

B - einem System zur Haftungsförderung des Netzwerks auf der Oberfläche des Textilmaterials, das aus Folgendem besteht:

• entweder B-1 mindestens einem Metallalkoxid mit der allgemeinen Formel: $M[(OHC_2CH_2)_a\ OR^2]_n$ (I) worin:
- M ein Metall ist, ausgewählt aus der Gruppe, gebildet aus: Ti, Zr, Ge, Si, Mn und Al;
- n = Valenz von M;
- die Substituenten $R^2$, gleich oder verschieden, jeweils für einen geradkettigen oder verzweigtkettigen $C_1$-$C_{12}$-Alkylrest stehen;
- a für null, 1 oder 2 steht;
- unter Bedingungen, bei denen, wenn das Symbol a für null steht, der Alkylrest $R^2$ 2 bis 12 Kohlenstoffatome aufweist, und wenn das Symbol a für 1 oder 2 steht, der Alkylrest $R^2$ 1 bis 4 Kohlenstoffatome aufweist;

• oder B-2 mindestens einem Metallpolyalkoxid, das aus der Partialhydrolyse der oben genannten monomeren Alkoxide mit der Formel (I) abgeleitet ist, worin das Symbol $R^2$ die vorgenannte Bedeutung hat, wenn das Symbol a für null steht;
• oder einer Assoziation aus B-1 und B-2;
• oder B-3 einer Assoziation aus B-1 und/oder B-2, wobei:

- B-3/1 mindestens ein gegebenenfalls alkoxyliertes Organosilan ist, das, je Molekül, mindestens eine $C_2$-$C_6$-Alkenylgruppe enthält,
- und/oder B-3/2 mindestens eine siliciumorganische Vebindung ist, die mindestens einen Epoxid-,

Amino-, Ureido-, Isocyanato- und/oder Isocyanuratrest umfasst;

C - einem funktionellen Zusatzstoff, der aus Folgendem besteht:

- entweder C-1 ausgewählt aus:

- den Polyalkoxysilanen mit der Formel:

$$(R^1)_bSi[(OCH_2CH_2)_a\ OR^2]_{4-b} \qquad (II)$$

worin:

+ die Substituenten $R^1$ und $R^2$ und das Symbol a sind, wie oben für die Beschreibung der Bestandteile A und B definiert;
+ b gleich 1, 2 oder 3 ist;

- die im wesentlichen geradkettigen Diorganopolysiloxane, die an jedem Kettenende eine Hydroxylgruppe mit der folgenden Formel umfassen:

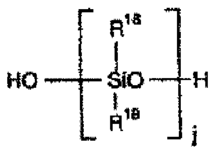

(III)

worin:

+ die Substituenten $R^{18}$, gleich oder verschieden, jeweils für einen substituierten oder nicht substituierten, aliphatischen, cyclanischen oder aromatischen, gesättigten oder ungesattigten einwertigen $C_1$-$_{13}$-Kohlenwasserstoffrest stehen;
+ j einen Wert hat, der ausreicht, um den Diorganopolysiloxanen mit der Formel (III) eine dynamische viskosität bei 25 °C zu verleihen, die im Bereich zwischen 1.000 bis 10.000.000 mPa.s liegt;

- den POS-Polyether-Copolymeren, die insbesondere aus der Umsetzung eines Polyethers mit der Formel:

$$CH_2{=}CH\text{-}CH_2\text{-}[OCH_2CH_2]_v\text{-}[OCH_2CH(CH_3)]_w\text{-}OH$$

auf einem POS-Öl mit der folgenden Formel stammen:

$$Me_3SiO(Me_2SiO)_{x'}(MeHSiO)_{y'}SiMe_3,$$

+ wobei Me Methyl;
+ wobei v und w verschieden von 0 sind und insbesondere zwischen 5 und 30 liegen;
+ wobei x' im Bereich zwischen 20 und 150 liegt;
+ wobei y' im Bereich zwischen 2 und 10 liegt;
+ wobei dem Copolymer ein Zusatzstoff, wie etwa ein freier Polyether, zugegeben werden kann;
- den hydroxylierten POS-Harzen, die in ihrer Struktur siloxylierte Motive T und gegebenenfalls M und/oder gegebenenfalls D, wie oben für die Harze A definiert, umfassen;
- den hydroxylierten POS-Harzen, die insbesondere erhalten werden:

→ durch Hydrolyse eines Alkoxysilans S, das mit Funktionen FU substituiert ist;
→ durch Homokondensation der hydroxylierten Silane S;
→ und durch "stripping" Dampfdestillation der Hydrolysate, die von den FU abgeleitet sind; und

- den Gemischen der vorher genannten siliciumorganischen Verbindungen.

• oder C-2 ausgewählt aus:

- den fluorierten Alkoholen mit der Formel:

$$R^{19}\text{-OH} \qquad (IV)$$

worin $R^{19}$ für einen geradkettigen oder verzweigtkettigen aliphatischen Rest mit 2 bis 20 Kohlenstoffatomen steht, wobei die Kohlenstoffatome mit mindestens einem Fluoratom und gegebenenfalls mit mindestens einem Wasserstoffatom substituiert sind; und

- den nicht blockierten Polyethern mit der Formel:

$$R^{20}\text{-}[OCH_2CH_2]_v\text{-}[OCH_2CH(CH_3))_w\text{-}OH \qquad (V)$$

worin $R^{20}$ für einen geradkettigen oder verzweigtkettigen Alkylrest mit 1 bis 4 Kohlenstoffatomen steht und die Symbole v und w sind, wie oben definiert.

• oder einem Gemisch aus C-1 und C-2;

- D - gegebenenfalls einem nicht reaktiven Zusatzstoffsystem, das aus Folgendem besteht: (i) mindestens einem Lösemittel/organischen Verdünnungsmittel und/oder einer nicht reaktiven siliciumorganischen Verbindung; (2i) und/oder aus Wasser, falls eine flüssige Silikonzusammensetzung in Form einer Emulsion oder einer wässrigen Dispersion eingesetzt wird; und

- unter der Bedingung, dass Folgendes eingesetzt wird (die Teile sind in Gewicht angegeben):
- für 100 Teile von Bestandteil A,
- 0,5 bis 200 Teile von Bestandteil B,
- 1 bis 1.000 Teile von Bestandteil C, und
- 0 bis 10.000 Teile von Bestandteil D.

**2.** Verwendung nach Anspruch 1, **dadurch gekennzeichnet, dass** in der Definition von Bestandteil A der Rest $R^1$ ein geradkettiger oder verzweigtkettiger $C_1$-$C_3$-Akylrest ist.

**3.** Verwendung nach den Ansprüchen 1 oder 2, **dadurch gekennzeichnet, dass** als Bestandteil A die Gemische A-3:

- aus mindestens einem Harz, das in seiner Struktur mindestens zwei verschiedene siloxylierte Motive aufweist, ausgewählt aus jenen mit der Formel $(R^3)_3SiO_{0.5}$ (Motiv M), $(R^3)_2SiO$ (Motiv D) und $R^3SiO_{1.5}$ (Motiv T), wobei mindestens eines dieser Motive ein Motiv T ist, wobei die OH- und/oder $OR^1$-Gruppen von den Motiven M, D und/oder T getragen werden können und der Gewichtsanteil an OH- und/oder $OR^1$-Gruppen zwischen 0,2 und 10 Gew.-% liegt, und
- aus mindestens einem anderen Harz, das in seiner Struktur mindestens zwei verschiedene siloxylierte Motive aufweist, ausgewählt aus jenen mit der Formel $(R^3)_3SiO_{0.5}$ (Motiv M), $(R^3)_2SiO$ (Motiv D) und $R^3SiO_{1.5}$ (Motiv T) und $SiO_2$ (Motiv Q), wobei mindestens eines dieser Motive ein Motiv Q ist, wobei die OH-und/oder $OR^1$-Gruppen von den Motiven M, D und/oder T getragen werden können und der Gewichtsanteil an OH- und/oder $OR^1$-Gruppen zwischen 0,2 und 10 Gew.-% liegt, eingesetzt werden,
- wobei die Reste $R^3$, die in diesen Harzen vorhanden sind, gleich oder verschieden sind und aus den geradkettigen oder verzweigtkettigen $C_1$-$C_6$-Alkylresten, den $C_2$-$C_4$-Alkenylresten, Phenyl, Trifluor-3,3,3-propyl ausgewählt sind.

**4.** Verwendung nach einem der Ansprüche 1 bis 3, **dadurch gekennzeichnet, dass** eingesetzt werden:

- als Bestandteil B-1: Alkyltitanate, wie Ethyltitanat, Propyltitanat, Isopropyltitanat, Butyltitanat, Ethyl-2-hexyltitanat, Octyltitanat, Decyltitanat, Dodecyltitanat, β-Methoxyethyltitanat, β-Ethoxyethyltitanat, β-Propoxyethyltitanat, das Titanat mit der Formel $Ti[(OCH_2CH_2)_2OCH_3]_4$; Alkylzirconate, wie Propylzirconat, Butylzirconat; Aklylsilicate, wie Methylsilicat, Ethylsilicat, Isopropylsilicat, n-Propylsilicat; und Gemische dieser Produkte;
- als Bestandteil B-2: Polytitanate B-2, die aus der Partialhydrolyse der Isopropyl-, Butyl- oder Ethyl-2-hexyltitanate stammen; Polyzirconate B-2, die aus der Partialhydrolyse der Propyl- und Butylzirconate stammen; Polysilicate B-2, die aus der Partialhydrolyse der Ethyl- und Isopropylsilicate stammen; und Gemische dieser

Produkte.

5. Verwendung nach einem der Ansprüche 1 bis 4, **dadurch gekennzeichnet, dass** eingesetzt werden:

- für 100 Teile von Bestandteil A,
- 0,5 bis 100 Teile von Bestandteil B,
- 1 bis 300 Teile von Bestandteil C, und
- 0 bis 5.000 Teile von Bestandteil D.

6. Verwendung nach einem der Ansprüche 1 bis 5, **dadurch gekennzeichnet, dass** die flüssigen, vernetzbaren Silikonzusammensetzungen, die als textiles Beschichtungsmittel verwendet werden, in konzentrierter Form hergestellt werden, dann zum zeitpunkt ihrer Verwendung mit einem organischen Verdünnungsmittel, einem organischen Lösemittel oder Wasser im Verhältnis von 1 bis 30 Gewichtsteilen der Zusammensetzung zu 100 Gewichtsteilen Lösemittel, Verdünnungsmittel oder Wasser verdünnt werden.

7. Verwendung nach einem der Ansprüche 1 bis 6, **dadurch gekennzeichnet, dass** sie ausgeführt wird, indem die textilen Gegenstände, die mindestens eine textile Oberfläche umfassen, direkt mit dem Beschichtungsmittel für Textilmaterial in Kontakt gebracht werden, wobei an einem beliebigen Zeitpunkt während der Prozesse zur Herstellung und/oder Instandsetzung und/oder Instandhaltung des Textilmaterials vorgegangen wird.

8. Verwendung nach einem der Ansprüche 1 bis 6, **dadurch gekennzeichnet, dass** sie ausgeführt wird, indem die Fäden, Fasern und/oder Filamente mit dem textilen Beschichtungsmittel an einem beliebigen Zeitpunkt während der Prozesse zur Herstellung des Textilmaterials in Kontakt gebracht werden.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- DE 2822393 A


### Littérature non-brevet citée dans la description


- **Spray-Test.** *AATC Test Method,* 1996, vol. 22
- *AATC Test Method,* 1997, vol. 118